# EUROPEAN PATENT APPLICATION

(11) **EP 4 668 975 A1**
(43) Date of publication of application: **24.12.2025**
(21) Application number: 23921799.5
(22) Date of filing: 15.02.2023
(51) Int. Cl.: H04W 72/231, H04W 72/232, H04L 5/00

(54) **TRANSMISSION CONFIGURATION INDICATION STATE CONFIGURATION METHOD, APPARATUS AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/076303
(87) International publication number: WO 2024/168636

(57) **Abstract**

The present disclosure relates to a transmission configuration indication (TCI) state configuration method, apparatus and device, and a storage medium. The method comprises: receiving indication information, wherein the indication information is used for determining a unified TCI state, the unified TCI state comprises N sets of TCI states, and N is a positive integer; and determining a TCI state corresponding to a channel state information reference signal (CSI-RS) resource. By means of the present disclosure, in a multi-TRP scenario, a TCI state corresponding to a CSI-RS resource is determined, thereby improving the transmission flexibility of a CSI-RS resource based on a unified TCI state.

## Description

### TECHNICAL FIELD

The present disclosure relates to the field of communication technologies, and in particular to a method and apparatus and device for configuring a transmission configuration indication state, and a storage medium.

### BACKGROUND

In New Radio (NR), especially when a communication frequency band is in frequency range 2, due to the rapid attenuation of high-frequency channels, beam-based transmission and reception are required to ensure coverage.

In conventional methods, beams used for transmissions of a Physical Downlink Control Channel (PDCCH) and/or a Demodulation Reference Signal (DRS) for the PDCCH, a Physical Downlink Shared Channel (PDSCH) and/or a DMRS for the PDSCH, a Physical Uplink Control Channel (PUCCH) and/or a DMRS for the PUCCH, a Physical Uplink Shared Channel (PUSCH) and/or a DMRS for the PUSCH, and/or reference signals are independently indicated. The reference signals may include a Channel State Information Reference Signal (CSI-RS), a Sounding Reference Signal (SRS), a Positioning Reference Signal (PRS), a time-frequency Tracking Reference Signal (TRS), etc. For example, the CSI-RS may include a CSI-RS for channel state information measurement, a CSI-RS for beam measurement, or a CSI-RS for pathloss estimation. The SRS may include an SRS for codebook-based or non-codebook-based channel state information measurement, an SRS for beam measurement, or an SRS for positioning measurement.

Generally, in the conventional methods, transmissions of the PDCCH and/or the DMRS for the PDCCH and the PUCCH and/or the DMRS for the PUCCH are performed by activating corresponding beams through Medium Access Control Control Elements (MAC CEs), respectively, and transmissions of the PDSCH and/or the DMRS for the PDSCH and the PUSCH and/or the DMRS for the PUSCH are performed by indicating corresponding beams through Downlink Control Information (DCI) signalings, respectively. The beam can be indicated by a Transmission Configuration Indication (TCI) state or spatial relation information (spatialrelationinfo).

In some technologies, in order to reduce signaling overhead, the use of a unified TCI state is proposed. In the case of multiple TRPs (i.e., M-TRP), how to determine a relationship between the CSI-RS and the TCI state is still under discussion.

### SUMMARY

In order to overcome the problems existing in the related arts, the present disclosure provides a method and apparatus and device for configuring a transmission configuration indication state, and a storage medium.

According to a first aspect of embodiments of the present disclosure, there is provided a method for configuring a Transmission Configuration Indication (TCI) state, which is performed by a terminal. The method includes: receiving indication information, wherein the indication information is used to determine a unified TCI state, the unified TCI state includes N sets of TCI states, where N is a positive integer; and determining a TCI state corresponding to a Channel State Information Reference Signal (CSI-RS) resource.

In some implementations, in response to N being equal to 1 and existence of at least two Control Resource Sets (CORESETs) corresponding to different CORESET pool indexes, determining the TCI state corresponding to the CSI-RS resource by using at least one of manners: performing determination based on a configuration of a Radio Resource Control (RRC) signaling or a first Medium Access Control Control Element (MAC CE) signaling; performing determination based on a first CORESET, wherein the first CORESET is a CORESET corresponding to a Physical Downlink Control Channel (PDCCH) that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or performing determination based on other downlink signal, wherein the other downlink signal is overlapped with the CSI-RS resource in a time domain, and a CORESET corresponding to a PDCCH that schedules the other downlink signal and the CORESET corresponding to the PDCCH that schedules the CSI-RS resource have the same CORESET pool index.

In some implementations, the CORESET pool index is associated with a Physical Cell Identifier (PCI) of a serving cell; or, the CORESET pool index is associated with a PCI of a non-serving cell.

In some implementations, in response to N being greater than or equal to 1 and the PDCCH being not configured with a Single Frequency Network (SFN) scheme, determining the TCI state corresponding to the CSI-RS resource by using at least one of manners: performing determination based on a configuration of a RRC signaling or a first MAC CE signaling; performing determination based on a default TCI state of a Physical Downlink Shared Channel (PDSCH); performing determination based on a first CORESET, wherein the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active Bandwidth Part (BWP); or performing determination based on other downlink signal, wherein the other downlink signal is overlapped with the CSI-RS resource in a time domain.

In some implementations, in response to N being greater than or equal to 1, the PDCCH being configured with an SFN scheme, and at least one CORESET being used to transmit the PDCCH based on a plurality of TCI states, determining the TCI state corresponding to the CSI-RS resource by using at least one of manners: performing determination based on a configuration of a RRC signaling or a first MAC CE signaling; performing determination based on other downlink signal, wherein the other downlink signal is overlapped with the CSI-RS resource in a time domain; or performing determination based on at least a first set of TCI states in a first CORESET, wherein the first CORESET is a CORESET with the smallest CORESET index corresponding to a search space in the most recently detected slot.

In some implementations, in response to the TCI state corresponding to the CSI-RS resource being determined based on the configuration of the RRC signaling or the first MAC CE signaling, the configuration includes at least one of: configuring a first parameter for the CSI-RS resource or a CSI-RS resource set; configuring a CORESET pool index for the CSI-RS resource or the CSI-RS resource set; configuring an association relationship between the CSI-RS resource or the CSI-RS resource set and a TCI state of a CORESET pool index; or configuring an association relationship between the CSI-RS resource or the CSI-RS resource set and at least one of the N sets of TCI states.

In some implementations, in response to the TCI state corresponding to the CSI-RS resource being determined based on the first CORESET, and/or in response to the TCI state corresponding to the CSI-RS resource being determined based on the default TCI state of the PDSCH, an offset between the PDCCH that schedules the CSI-RS resource and the CSI-RS resource is less than a first threshold.

In some implementations, in response to the TCI state corresponding to the CSI-RS resource being determined based on the other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

In some implementations, receiving the indication information includes: receiving at least one indication information, wherein each of the at least one indication information is used to indicate K sets of TCI states, K values corresponding to different indication information are the same or different, and K is a positive integer; the N sets of TCI states are determined based on K sets of TCI states indicated by first indication information, and the at least one indication information includes the first indication information; or, the N sets of TCI states are determined based on K sets of TCI states indicated by a plurality of indication information.

In some implementations, in response to the N sets of TCI states being determined based on the K sets of TCI states indicated by the first indication information, the first indication information is indication information most recently received.

In some implementations, in response to the N sets of TCI states being determined based on the K sets of TCI states indicated by the plurality of indication information, the plurality of indication information includes the first indication information and second indication information; the first indication information is indication information most recently received; the second indication information is indication information before the first indication information, and at least one set of TCI states in the second indication information is not updated in the first indication information.

In some implementations, the indication information is carried by a second MAC CE, the second MAC CE is used to indicate the K sets of TCI states, and the K sets of TCI states correspond to a codepoint of a TCI state field in a first DCI.

In some implementations, the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

In some implementations, each set of TCI states includes at least one of: an Uplink (UL) TCI state and/or a Downlink (DL) TCI state; or a joint TCI state.

In some implementations, the CSI-RS resource includes at least one of: a resource for Channel State Information (CSI) measurement; or a CSI-RS resource for beam management.

According to a second aspect of embodiments of the present disclosure, there is provided a method for configuring a Transmission Configuration Indication (TCI) state, which is performed by a network device. The method includes: sending indication information, wherein the indication information is used to determine a unified TCI state, the unified TCI state includes N sets of TCI states, where N is a positive integer; and determining a TCI state corresponding to a Channel State Information Reference Signal (CSI-RS) resource.

In some implementations, in response to N being equal to 1 and existence of at least two Control Resource Sets (CORESETs) corresponding to different CORESET pool indexes, determining the TCI state corresponding to the CSI-RS resource by using at least one of manners: sending a Radio Resource Control (RRC) signaling or a first Medium Access Control Control Element (MAC CE) signaling to configure the TCI state corresponding to the CSI-RS resource; configuring a TCI state of a first CORESET, wherein the first CORESET is used by a terminal to determine the TCI state corresponding to the CSI-RS resource, the first CORESET is a CORESET corresponding to a Physical Downlink Control Channel (PDCCH) that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or sending other downlink signal, wherein the other downlink signal is used by the terminal to determine the TCI state corresponding to the CSI-RS resource, the other downlink signal is overlapped with the CSI-RS resource in a time domain, and a CORESET corresponding to a PDCCH that schedules the other downlink signal and the CORESET corresponding to the PDCCH that schedules the CSI-RS resource have the same CORESET pool index.

In some implementations, the CORESET pool index is associated with a Physical Cell Identifier (PCI) of a serving cell; or, the CORESET pool index is associated with a PCI of a non-serving cell.

In some implementations, in response to N being greater than or equal to 1 and the PDCCH being not configured with a Single Frequency Network (SFN) scheme, determining the TCI state corresponding to the CSI-RS resource by using at least one of manners: sending a RRC signaling or a first MAC CE signaling to configure the TCI state corresponding to the CSI-RS resource; performing determination based on a default TCI state of a PDSCH; configuring a TCI state of a first CORESET, wherein the first CORESET is used by a terminal to determine the TCI state corresponding to the CSI-RS resource, the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active Bandwidth Part (BWP); or sending other downlink signal, wherein the other downlink signal is used by the terminal to determine the TCI state corresponding to the CSI-RS resource, and the other downlink signal is overlapped with the CSI-RS resource in a time domain.

In some implementations, in response to N being greater than or equal to 1, the PDCCH being configured with an SFN scheme, and at least one CORESET being used to transmit the PDCCH based on a plurality of TCI states, determining the TCI state corresponding to the CSI-RS resource by using at least one of manners: sending a RRC signaling or a first MAC CE signaling to configure the TCI state corresponding to the CSI-RS resource; sending other downlink signal, wherein the other downlink signal is used by the terminal to determine the TCI state corresponding to the CSI-RS resource, and the other downlink signal is overlapped with the CSI-RS resource in a time domain; or configuring at least a first set of TCI states in a first CORESET, wherein at least the first set of TCI states in the first CORESET is used by the terminal to determine the TCI state corresponding to the CSI-RS resource, and the first CORESET is a CORESET with the smallest CORESET index corresponding to a search space in the most recently detected slot.

In some implementations, in response to sending the RRC signaling or the first MAC CE signaling to configure the TCI state corresponding to the CSI-RS resource, the configuration includes at least one of: configuring a first parameter for the CSI-RS resource or a CSI-RS resource set; configuring a CORESET pool index for the CSI-RS resource or the CSI-RS resource set; configuring an association relationship between the CSI-RS resource or the CSI-RS resource set and a TCI state of a CORESET pool index; or configuring an association relationship between the CSI-RS resource or the CSI-RS resource set and at least one of the N sets of TCI states.

In some implementations, in response to configuring the TCI state of the first CORESET, and/or in response to determining the TCI state corresponding to the CSI-RS resource based on the default TCI state of the PDSCH, an offset between the PDCCH that schedules the CSI-RS resource and the CSI-RS resource is less than a first threshold.

In some implementations, in response to sending the other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

In some implementations, sending the indication information includes: sending at least one indication information, wherein each of the at least one indication information is used to indicate K sets of TCI states, K values corresponding to different indication information are the same or different, and K is a positive integer; the N sets of TCI states are determined based on K sets of TCI states indicated by first indication information, and the at least one indication information includes the first indication information; or, the N sets of TCI states are determined based on K sets of TCI states indicated by a plurality of indication information.

In some implementations, in response to the N sets of TCI states being determined based on the K sets of TCI states indicated by the first indication information, the first indication information is indication information most recently sent.

In some implementations, in response to the N sets of TCI states being determined based on the K sets of TCI states indicated by the plurality of indication information, the plurality of indication information includes the first indication information and second indication information; the first indication information is indication information most recently sent; the second indication information is indication information before the first indication information, and at least one set of TCI states in the second indication information is not updated in the first indication information.

In some implementations, the indication information is carried by a second MAC CE, the second MAC CE is used to indicate the K sets of TCI states, and the K sets of TCI states correspond to a codepoint of a TCI state field in a first DCI.

In some implementations, the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

In some implementations, each set of TCI states includes at least one of: an Uplink (UL) TCI state and/or a Downlink (DL) TCI state; or a joint TCI state.

In some implementations, the CSI-RS resource includes at least one of: a resource for Channel State Information (CSI) measurement; or a CSI-RS resource for beam management.

According to a third aspect of embodiments of the present disclosure, there is provided an apparatus for configuring a transmission configuration indication state, and the apparatus includes: a receiving module, configured to receive indication information, wherein the indication information is used to determine a unified TCI state, and the unified TCI state includes N sets of TCI states, where N is a positive integer; and a processing module, configured to determine a TCI state corresponding to a CSI-RS resource.

In some implementations, in response to N being equal to 1 and existence of at least two CORESETs corresponding to different CORESET pool indexes, determining the TCI state corresponding to the CSI-RS resource by using at least one of manners: performing determination based on a configuration of a Radio Resource Control (RRC) signaling or a first Medium Access Control Control Element (MAC CE) signaling; performing determination based on a first CORESET, wherein the first CORESET is a CORESET corresponding to a PDCCH that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or performing determination based on other downlink signal, wherein the other downlink signal is overlapped with the CSI-RS resource in a time domain, and a CORESET corresponding to a PDCCH that schedules the other downlink signal and the CORESET corresponding to the PDCCH that schedules the CSI-RS resource have the same CORESET pool index.

In some implementations, the CORESET pool index is associated with a PCI of a serving cell; or, the CORESET pool index is associated with a PCI of a non-serving cell.

In some implementations, in response to N being greater than or equal to 1 and the PDCCH being not configured with an SFN scheme, determining the TCI state corresponding to the CSI-RS resource by using at least one of manners: performing determination based on a configuration of a RRC signaling or a first MAC CE signaling; performing determination based on a default TCI state of a PDSCH; performing determination based on a first CORESET, wherein the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active BWP; or performing determination based on other downlink signal, wherein the other downlink signal is overlapped with the CSI-RS resource in a time domain.

In some implementations, in response to N being greater than or equal to 1, a PDCCH being configured with an SFN scheme, and at least one CORESET being used to transmit the PDCCH based on a plurality of TCI states, determining the TCI state corresponding to the CSI-RS resource by using at least one of manners: performing determination based on a configuration of a RRC signaling or a first MAC CE signaling; performing determination based on other downlink signal, wherein the other downlink signal is overlapped with the CSI-RS resource in a time domain; or performing determination based on at least a first set of TCI states in a first CORESET, wherein the first CORESET is a CORESET with the smallest CORESET index corresponding to a search space in the most recently detected slot.

In some implementations, in response to the TCI state corresponding to the CSI-RS resource being determined based on the configuration of the RRC signaling or the first MAC CE signaling, the configuration includes at least one of: configuring a first parameter for the CSI-RS resource or a CSI-RS resource set; configuring a CORESET pool index for the CSI-RS resource or the CSI-RS resource set; configuring an association relationship between the CSI-RS resource or the CSI-RS resource set and a TCI state of a CORESET pool index; or configuring an association relationship between the CSI-RS resource or the CSI-RS resource set and at least one of the N sets of TCI states.

In some implementations, in response to the TCI state corresponding to the CSI-RS resource being determined based on the first CORESET, and/or in response to the TCI state corresponding to the CSI-RS resource being determined based on the default TCI state of the PDSCH, an offset between the PDCCH that schedules the CSI-RS resource and the CSI-RS resource is less than a first threshold.

In some implementations, in response to the TCI state corresponding to the CSI-RS resource being determined based on the other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

In some implementations, the receiving module is further configured to receive at least one indication information, wherein each of the at least one indication information is used to indicate K sets of TCI states, K values corresponding to different indication information are the same or different, and K is a positive integer; the N sets of TCI states are determined based on K sets of TCI states indicated by first indication information, and the at least one indication information includes the first indication information; or, the N sets of TCI states are determined based on K sets of TCI states indicated by a plurality of indication information.

In some implementations, in response to the N sets of TCI states being determined based on the K sets of TCI states indicated by the first indication information, the first indication information is indication information most recently received.

In some implementations, in response to the N sets of TCI states being determined based on the K sets of TCI states indicated by the plurality of indication information, the plurality of indication information includes the first indication information and second indication information; the first indication information is indication information most recently received; the second indication information is indication information before the first indication information, and at least one set of TCI states in the second indication information is not updated in the first indication information.

In some implementations, the indication information is carried by a second MAC CE, the second MAC CE is used to indicate the K sets of TCI states, and the K sets of TCI states correspond to a codepoint of a TCI state field in a first DCI.

In some implementations, the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

In some implementations, each set of TCI states includes at least one of: an Uplink (UL) TCI state and/or a Downlink (DL) TCI state; or a joint TCI state.

In some implementations, the CSI-RS resource includes at least one of: a resource for CSI measurement; or a CSI-RS resource for beam management.

According to a fourth aspect of embodiments of the present disclosure, there is provided an apparatus for configuring a transmission configuration indication state, and the apparatus includes: a sending module, configured to send indication information, wherein the indication information is used to determine a unified TCI state, and the unified TCI state includes N sets of TCI states, where N is a positive integer; and a processing module, configured to determine a TCI state corresponding to a CSI-RS resource.

In some implementations, in response to N being equal to 1 and existence of at least two CORESETs corresponding to different CORESET pool indexes, determining the TCI state corresponding to the CSI-RS resource by using at least one of manners: the sending module is further configured to send a RRC signaling or a first MAC CE signaling to configure the TCI state corresponding to the CSI-RS resource; the processing module is further configured to configure a TCI state of a first CORESET, wherein the first CORESET is used by a terminal to determine the TCI state corresponding to the CSI-RS resource, the first CORESET is a CORESET corresponding to a PDCCH that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or the sending module is further configured to send other downlink signal, wherein the other downlink signal is used by the terminal to determine the TCI state corresponding to the CSI-RS resource, the other downlink signal is overlapped with the CSI-RS resource in a time domain, and a CORESET corresponding to a PDCCH that schedules the other downlink signal and the CORESET corresponding to the PDCCH that schedules the CSI-RS resource have the same CORESET pool index.

In some implementations, the CORESET pool index is associated with a PCI of a serving cell; or, the CORESET pool index is associated with a PCI of a non-serving cell.

In some implementations, in response to N being greater than or equal to 1 and the PDCCH being not configured with an SFN scheme, determining the TCI state corresponding to the CSI-RS resource by using at least one of manners: the sending module is further configured to send a RRC signaling or a first MAC CE signaling to configure the TCI state corresponding to the CSI-RS resource; the processing module is further configured to perform determination based on a default TCI state of a PDSCH; the processing module is further configured to configure a TCI state of a first CORESET, wherein the first CORESET is used by a terminal to determine the TCI state corresponding to the CSI-RS resource, the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active BWP; or the sending module is further configured to send other downlink signal, wherein the other downlink signal is used by the terminal to determine the TCI state corresponding to the CSI-RS resource, and the other downlink signal is overlapped with the CSI-RS resource in a time domain.

In some implementations, in response to N being greater than or equal to 1, the PDCCH being configured with an SFN scheme, and at least one CORESET being used to transmit the PDCCH based on a plurality of TCI states, determining the TCI state corresponding to the CSI-RS resource by using at least one of manners: the sending module is further configured to send a RRC signaling or a first MAC CE signaling to configure the TCI state corresponding to the CSI-RS resource; the sending module is further configured to send other downlink signal, wherein the other downlink signal is used by the terminal to determine the TCI state corresponding to the CSI-RS resource, and the other downlink signal is overlapped with the CSI-RS resource in a time domain; or the processing module is further configured to configure at least a first set of TCI states in a first CORESET, wherein at least the first set of TCI states in the first CORESET is used by the terminal to determine the TCI state corresponding to the CSI-RS resource, and the first CORESET is a CORESET with the smallest CORESET index corresponding to a search space in the most recently detected slot.

In some implementations, in response to sending the RRC signaling or the first MAC CE signaling to configure the TCI state corresponding to the CSI-RS resource, the configuration includes at least one of: configuring a first parameter for the CSI-RS resource or a CSI-RS resource set; configuring a CORESET pool index for the CSI-RS resource or the CSI-RS resource set; configuring an association relationship between the CSI-RS resource or the CSI-RS resource set and a TCI state of a CORESET pool index; or configuring an association relationship between the CSI-RS resource or the CSI-RS resource set and at least one of the N sets of TCI states.

In some implementations, in response to configuring the TCI state of the first CORESET, and/or in response to determining the TCI state corresponding to the CSI-RS resource based on the default TCI state of the PDSCH, an offset between the PDCCH that schedules the CSI-RS resource and the CSI-RS resource is less than a first threshold.

In some implementations, in response to sending the other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

In some implementations, the sending module is further configured to send at least one indication information, wherein each of the at least one indication information is used to indicate K sets of TCI states, K values corresponding to different indication information are the same or different, and K is a positive integer; the N sets of TCI states are determined based on K sets of TCI states indicated by first indication information, and the at least one indication information includes the first indication information; or, the N sets of TCI states are determined based on K sets of TCI states indicated by a plurality of indication information.

In some implementations, in response to the N sets of TCI states being determined based on the K sets of TCI states indicated by the first indication information, the first indication information is indication information most recently sent.

In some implementations, in response to the N sets of TCI states being determined based on the K sets of TCI states indicated by the plurality of indication information, the plurality of indication information includes the first indication information and second indication information; the first indication information is indication information most recently sent; the second indication information is indication information before the first indication information, and at least one set of TCI states in the second indication information is not updated in the first indication information.

In some implementations, the indication information is carried by a second MAC CE, the second MAC CE is used to indicate the K sets of TCI states, and the K sets of TCI states correspond to a codepoint of a TCI state field in a first DCI.

In some implementations, the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

In some implementations, each set of TCI states includes at least one of: an UL TCI state and/or a DL TCI state; or a joint TCI state.

In some implementations, the CSI-RS resource includes at least one of: a resource for CSI measurement; or a CSI-RS resource for beam management.

According to a fifth aspect of embodiments of the present disclosure, there is provided a device for configuring a Transmission Configuration Indication (TCI) state, including: a processor; and a memory configured to store executable instructions of the processor; wherein the processor is configured to execute the first aspect and any one of the methods in the first aspect.

According to a sixth aspect of embodiments of the present disclosure, there is provided a device for configuring a Transmission Configuration Indication (TCI) state, including: a processor; and a memory configured to store executable instructions of the processor; wherein the processor is configured to execute the second aspect and any one of the methods in the second aspect.

According to a seventh aspect of an embodiment of the present disclosure, there is provided a non-transitory computer-readable storage medium, wherein instructions in the storage medium, when executed by a processor of a terminal, enable the terminal to execute the first aspect and any one of the methods in the first aspect.

According to an eighth aspect of an embodiment of the present disclosure, there is provided a non-transitory computer-readable storage medium, wherein instructions in the storage medium, when executed by a processor of a network device, enable the network device to execute the second aspect and any one of the methods in the second aspect.

The technical solutions provided by the embodiments of the present disclosure may include the following beneficial effects: in a multi-TRP scenario, the TCI state corresponding to the CSI-RS resource is determined, thereby improving the transmission flexibility of the CSI-RS resource based on the unified TCI state.

It should be noted that the above general description and the following detailed description are merely exemplary and explanatory and should not be construed as limiting of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain principles of the present disclosure.
FIG. 1 shows a schematic diagram of a wireless communication system according to an example embodiment.
FIG. 2 shows a flowchart of a method for configuring a transmission configuration indication state according to an example embodiment.
FIG. 3 shows a flowchart of another method for configuring a transmission configuration indication state according to an example embodiment.
FIG. 4 shows a schematic diagram of an apparatus for configuring a transmission configuration indication state according to an example embodiment.
FIG. 5 shows a schematic diagram of another apparatus for configuring a transmission configuration indication state according to an example embodiment.
FIG. 6 shows a schematic diagram of a device for configuring a transmission configuration indication state according to an example embodiment.
FIG. 7 shows a schematic diagram of another device for configuring a transmission configuration indication state according to an example embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with embodiments of the present disclosure.

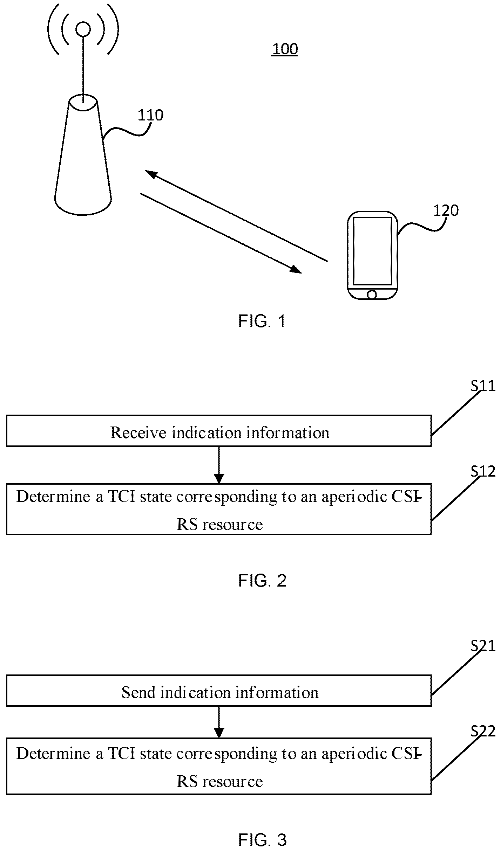

A communication method involved in the present disclosure can be applied to a wireless communication system 100 shown in FIG. 1. The network system may include a network device 110 and a terminal 120. It can be understood that the wireless communication system shown in FIG. 1 is only illustrative and may further include other network devices, for example, core network devices, radio relay devices, radio backhaul devices, etc., which are not depicted in FIG. 1. Embodiments of the present disclosure do not limit the number of network devices and the number of terminals included in the wireless communication system.

It can be further understood that the wireless communication system according to embodiments of the present disclosure is a network providing a wireless communication function. The wireless communication system may use different communication technologies, for example, Code Division A plurality of Access (CDMA), Wideband Code Division A plurality of Access (WCDMA), Time Division A plurality of Access (TDMA), Frequency Division A plurality of Access (FDMA), Orthogonal Frequency-Division A plurality of Access (OFDMA), Single Carrier FDMA (SC-FDMA), and Carrier Sense A plurality of Access with Collision Avoidance. Networks may be classified into 2nd generation (2G) networks, 3G networks, 4G networks, or future evolved networks, for example, 5th Generation Wireless Communication System (5G) networks according to factors of capacity, rate, latency, etc. of different networks. The 5G networks may also be referred to as new radio (NR) networks. For convenience of description, the present disclosure sometimes refers to a wireless communication network simply as a network.

Further, the network device 110 involved in the present disclosure may also be referred to as a radio access network device. The radio access network device may be a base station, an evolved Node B (eNB), a home base station, a radio relay node, a radio backhaul node, a transmission point (TP), a transmission and receiving point (TPR) or an access point (AP) in a Wireless Fidelity (WIFI) system, etc., or may be a gNB in an NR system, or may be a component or some of devices constituting a base station, etc. When the wireless communication system is a vehicle-to-everything (V2X) communication system, the network device may also be a vehicle-mounted device. It is to be understood that embodiments of the present disclosure do not limit a particular technology and a particular device configuration used by the network device.

Further, the terminal 120 involved in the present disclosure may also be referred to as a terminal device, a user equipment (UE), a mobile station (MS), a mobile terminal (MT), etc., and is a device that provides a user with speech and/or data connectivity. For example, the terminal may be a handheld device, a vehicle-mounted device, etc. which has a radio connection function. Some instances of the terminal include a mobile phone, a pocket personal computer (PPC), a palmtop computer, a personal digital assistant (PDA), a laptop computer, a tablet computer, a wearable device, a vehicle-mounted device, etc. Moreover, when the wireless communication system is the vehicle-to-everything (V2X) communication system, the terminal device may also be a vehicle-mounted device. It is to be understood that embodiments of the present disclosure do not limit a particular technology and a particular device configuration used by the terminal.

In embodiments of the present disclosure, the network device 110 and the terminal 120 may use any feasible wireless communication technology to achieve mutual data transmission. A transmission channel corresponding to the network device 110 sending data to the terminal 120 is called a downlink channel (DL), and a transmission channel corresponding to the terminal 120 sending data to the network device 110 is called an uplink channel (UL). It can be understood that the network device involved in embodiments of the present disclosure may be a base station. Alternatively, the network device may also be any other possible network device, and the terminal may be any possible terminal, which is not limited by the present disclosure.

In the NR, especially when a communication frequency band is in frequency range 2, due to the rapid attenuation of high-frequency channels, beam-based transmission and reception are required to ensure coverage.

In Release (Rel)-16, beams used for transmissions of a PDCCH and/or a DMRS for the PDCCH, a PDSCH and/or a DMRS for the PDSCH, a PUCCH and/or a DMRS for the PUCCH, a PUSCH and/or a DMRS for the PUSCH, and/or reference signals are independently indicated. The reference signals may include a CSI-RS, an SRS, a PRS, a TRS, etc. For example, the CSI-RS may include a CSI-RS for channel state information measurement, a CSI-RS for beam measurement, or a CSI-RS for pathloss estimation. The SRS may include an SRS for codebook-based or non-codebook-based channel state information measurement, an SRS for beam measurement, an SRS for antenna handover, or an SRS for positioning measurement.

Generally, in conventional methods, transmissions of the PDCCH and/or the DMRS for the PDCCH and the PUCCH and/or the DMRS for the PUCCH are performed by activating a beam through a MAC CE, and transmissions of the PDSCH and/or the DMRS for the PDSCH and the PUSCH and/or the DMRS for the PUSCH are performed by indicating their respective beams through DCI signalings, respectively.

In Rel-17, in order to reduce signaling overhead, the use of a unified TCI state is proposed. At present, the unified TCI state can be indicated separately for uplink and downlink, such as a DL TCI state and a UL TCI state. The unified TCI state can also be indicated jointly for uplink and downlink, such as a joint TCI state. For example, if a network device indicates a DL TCI state for downlink, then the DL TCI state can be used for the transmission of the PDSCH and/or the DMRS for the PDSCH of the terminal, the PDCCH and/or the DMRS for the PDCCH of the terminal and at least part of the CSI-RSs of the terminal. The at least part of the CSI-RSs can be aperiodic CSI-RSs. For another example, if the network device indicates a UL TCI state for uplink, then the UL TCI state can be used for the transmission of the PUSCH and/or the DMRS for the PUSCH of the terminal, the PUCCH and/or the DMRS for the PUCCH of the terminal, and at least part of the SRSs of the terminal. For yet another example, if the network device indicates a joint TCI state, the joint TCI state can be used for transmissions of both uplink and downlink channels and/or reference signals.

It can be understood that the TCI state can be used to indicate which receive beams the terminal uses when receiving the PDCCH and/or the DMRS for the PDCCH and/or the PDSCH and/or the DMRS for the PDSCH, for example, it indicates to use the same receive beam as that used for receiving which Synchronization Signal and Physical Broadcast Channel Block (SSB) or CSI-RS sent by the network device-that is, the receive beam corresponding to the transmit beam used for these reference signals. That is, the PDCCH and/or the DMRS for the PDCCH, and/or the PDSCH and/or the DMRS for the PDSCH are quasi co-located with the SSB or the CSI-RS. The TCI can also be used to indicate which transmit beams the terminal uses when sending the PUCCH and/or the DMRS for the PUCCH, and/or the PUSCH and/or the DMRS for the PUSCH, for example, it indicates to use the same transmit beam as that used by the network device to send which SSB or CSI-RS-that is, the transmit beam corresponding to the receive beam used for these reference signals, or the same transmit beam as that used by the terminal to send which SRS. That is, the PUCCH and/or the DMRS for PUCCH and/or the PUSCH and/or the DMRS for the PUSCH are quasi co-located with the SSB, the CSI -RS or the SRS. The beam refers to the Quasi Co-Location (QCL) type D.

The beams involved above may be indicated by the TCI state or spatialrelationinfo. The TCI state corresponding to the PDCCH includes a TCI state corresponding to the PDCCH and/or the DMRS for the PDCCH, that is, the TCI state is used for receiving the PDCCH and/or the DMRS for the PDCCH. Similarly, the TCI state corresponding to the PDSCH includes the TCI state corresponding to the PDSCH and/or the DMRS for the PDSCH, that is, the TCI state is used for receiving the PDSCH and/or the DMRS for the PDSCH; the TCI state or spatialrelationinfo corresponding to the PUCCH includes the TCI state or spatialrelationinfo corresponding to the PUCCH and/or the DMRS for the PUCCH, that is, the TCI state or spatialrelationinfo is used for sending the PUCCH and/or the DMRS for the PUCCH; the TCI state or spatialrelationinfo corresponding to the PUSCH includes the TCI state or spatialrelationinfo corresponding to the PUSCH and/or the DMRS for the PUSCH, that is, the TCI state or spatialrelationinfo is used for sending the PUSCH and/or the DMRS for the PUSCH.

However, at present, Rel-17 only considers the unified TCI state for the single-TRP. That is, it is only considered that one set of unified TCI states is configured for beam indication. For example, a UL TCI state, a DL TCI state and/or a joint TCI state may be included. When there is a multi-TRP providing transmission services to the terminal, a plurality of sets of TCI states will be configured accordingly. In this case, how to indicate the plurality of sets of TCI states is still undecided.

For the case of multi-TRP, there is a single DCI method. Correspondingly, among the PDCCH and/or the DMRS for the PDCCH, the PDSCH and/or the DMRS for the PDSCH, the PUCCH and/or the DMRS for the PUCCH, and the PUSCH and/or the DMRS for the PUSCH, if some of the channels and/or the DMRSs for these channels are configured with the multi-TRP, and some of the channels and/or the DMRSs for these channels are configured with the single-TRP, then when the unified TCI state indicates a plurality of sets of TCI states, for the channels configured with the multi-TRP, it may be necessary to implement dynamic switching between the multi-TRP and the single-TRP. Then how to determine which set or sets of TCI states among the plurality of sets of TCI states each channel corresponds to requires additional signaling to indicate.

In the related schemes, for the PDCCH, a Radio Resource Control (RRC) signaling is used to determine which set or sets of TCI states among the plurality of sets of TCI states each Control Resource Set (CORESET) or CORESET group uses to receive the PDCCH. In addition, for the PUCCH, the RRC signaling is also used to determine which set or sets of TCI states among the plurality of sets of TCI states each PUCCH or PUCCH group uses to send the PUCCH. For the PDSCH, a first indication field for the PDSCH in the DCI is used to determine which set or sets of TCI states among the plurality of sets of TCI states each PDSCH uses to receive the PDSCH. For the PUSCH, a second indication field for the PUSCH in the DCI is used to determine which set or sets of TCI states among the plurality of sets of TCI states each PUSCH uses to send the PUSCH.

In the related art, only the single-TRP case is considered. When the unified TCI state is configured, for the CSI-RS, it can be determined, based on whether a follow unified TCI state (followunifiedTClstate) parameter is configured, whether to use the unified TCI state as the CSI-RS resource.

However, for multiple (M) TRPs, if the unified TCI state is configured, how to determine the TCI state corresponding to the CSI-RS resource is still under discussion. It should be noted that the CSI-RS resource may include at least one of an aperiodic CSI-RS resource, a periodic CSI-RS resource, or a semi-persistent CSI-RS resource.

Therefore, the present disclosure provides a method, apparatus and device for configuring a TCI state and a storage medium, which determine the TCI state corresponding to the CSI-RS resource in a multi-TRP scenario, thereby improving the transmission flexibility of the CSI-RS resource based on the unified TCI state.

FIG. 2 shows a flowchart of a method for configuring a transmission configuration indication state according to an example embodiment. As shown in FIG. 2, the method is performed by a terminal and may include steps S11 and S12.

In the step S11, indication information is received.

In some embodiments, the terminal may receive the indication information. The indication information may be used to determine the unified TCI state, and the unified TCI state may include N sets of TCI states, where N is a positive integer.

For example, the terminal may receive one or more indication information sent by the network device, and determine the N sets of TCI states according to K sets of TCI states indicated by each of the one or more indication information.

For example, the terminal can determine the N sets of TCI states by receiving one indication information. It can be understood that the K sets of TCI states indicated by the indication information are used as the N sets of TCI states.

For another example, the terminal can determine the N sets of TCI states by receiving a plurality of indication information. For example, the first indication information indicates two sets of TCI states, including a first set of TCI states and a second set of TCI states. The second indication information may indicate one set of TCI states, and the one set of TCI states indicated by the second indication information may be an update of the first set of TCI states among the two sets of TCI states indicated by the first indication information. Then the N sets of TCI states may include only the one set of TCI states indicated by the second indication information; or the N sets of TCI states include the second set of TCI states indicated by the first indication information, and the first set of TCI states indicated by the second indication information.

It can be understood that in each embodiment of the present disclosure, each of the at least one indication information can be used to indicate the K sets of TCI states. The terminal can determine the N sets of TCI states based on the K sets of TCI states indicated by each of the at least one indication information.

Alternatively, the one set of TCI states indicated by the second indication information may also be an update of the second set of TCI states among the two sets of TCI states indicated by the first indication information. It should be understood that the first set of TCI state and/or the second set of TCI state included in the N sets of TCI states should be the latest first set of TCI states and the latest second set of TCI states indicated by the plurality of indication information, respectively.

For another example, the first indication information indicates one set of TCI states, for example, corresponding to the first set of TCI states, and the second indication information indicates one set of TCI states, for example, corresponding to the second set of TCI states. The N sets of TCI states may include the first set of TCI states and the second set of TCI states indicated by the two indication information, respectively. The first set of TCI states and the second set of TCI states can be understood as corresponding to different TRPs, or corresponding to different bit positions contained in the MAC CE or corresponding to different bit indication identities or other features, which is not limited by the present disclosure.

In the step S12, a TCI state corresponding to a CSI-RS resource is determined.

In some embodiments, the terminal can determine the TCI state corresponding to the CSI-RS resource. For example, the terminal can determine the N sets of TCI states based on the indication information received in the S11, and then determine, according to the N sets of TCI states, the TCI state corresponding to the CSI-RS resource.

It should be noted that the CSI-RS resource in all embodiments of the present disclosure may include at least one of an aperiodic CSI-RS resource, a periodic CSI-RS resource, or a semi-persistent the CSI-RS resource.

For example, the terminal determines the N sets of TCI states according to the received indication information. The terminal determines, based on one or more sets of TCI states among the N sets of TCI states, the TCI state corresponding to the CSI-RS resource.

In some embodiments, N may be greater than or equal to one.

It can be understood that this embodiment can correspond to an M-DCI based M-TRP scenario, that is, a multi-DCI and multi-TRP scenario.

In some embodiments, N may be equal to 1 and the terminal has at least two CORESETs corresponding to different CORESET pool indexes, where the index may be an identity (ID) or an index.

For example, the CORESET pool index may be CORESETPoolIndex.

It can be understood that this embodiment can correspond to an S-DCI based M-TRP scenario, that is, a single DCI (S-DCI) and multi-TRP scenario.

The present disclosure determines the TCI state corresponding to the CSI-RS resource in the multi-TRP scenario, thereby improving the transmission flexibility of the CSI-RS resource based on the unified TCI state.

In the method for configuring the transmission configuration indication state provided by embodiments of the present disclosure, in response to N being equal to 1 and there being at least two CORESETs corresponding to different CORESET pool indexes, the TCI state corresponding to the CSI-RS resource is determined by using at least one of manners: performing determination based on a configuration of a RRC signaling or a first MAC CE signaling; performing determination based on a first CORESET, the first CORESET is a CORESET corresponding to a PDCCH that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or performing determination based on other downlink signal, the other downlink signal is overlapped with the CSI-RS resource in a time domain, and a CORESET corresponding to a PDCCH that schedules the other downlink signal and the CORESET corresponding to the PDCCH that schedules the CSI-RS resource have the same CORESET pool index.

It should be noted that the present disclosure does not limit an execution order of configuring the TCI state corresponding to the CSI-RS resource based on the RRC signaling or the first MAC CE signaling and determining the N sets of TCI states based on the indication information. That is to say, the N sets of TCI states can be determined based on the indication information first, and then the TCI state corresponding to the CSI-RS resource can be configured based on the RRC signaling or the first MAC CE signaling; or, the TCI state corresponding to the CSI-RS resource can be configured based on the RRC signaling or the first MAC CE signaling first, and then the N sets of TCI states can be determined based on the indication information, which is not limited by the present disclosure.

In some embodiments, for the M-DCI based M-TRP scenario, since each TRP is indicated by its corresponding DCI, the indication information received by the terminal only indicates the TCI state corresponding to the TRP. In other words, only one set of TCI states needs to be indicated, in which case N can be 1. However, since different TRPs indicate respective TCI states through their corresponding PDCCHs, there are at least two CORESETs corresponding to different CORESETPoolIndex in the terminal.

In some embodiments, in response to N being equal to 1, and there being the at least two CORESETs corresponding to the different CORESET pool indexes, the TCI state corresponding to the CSI-RS resource can be determined based on the configuration of the RRC signaling or the first MAC CE signaling.

For example, in the M-DCI based M-TRP scenario, the terminal can determine the TCI state corresponding to the CSI-RS resource based on the configuration of the RRC signaling or the first MAC CE signaling.

For example, the network device configures, through the RRC signaling or the first MAC CE signaling, the TCI state corresponding to the CSI-RS resource. The terminal parses the received RRC signaling or the first MAC CE signaling to determine the TCI state corresponding to the CSI-RS resource.

In some embodiments, in response to N being equal to 1, and there being the at least two CORESETs corresponding to the different CORESET pool indexes, the TCI state corresponding to the CSI-RS resource can be determined based on the first CORESET. The first CORESET may be the CORESET corresponding to the PDCCH that schedules the CSI-RS resource. Alternatively, the first CORESET may be the CORESET that has the same CORESET pool index as the CORESET corresponding to the PDCCH that schedules the CSI-RS resource and that has the smallest CORESET index among the CORESETs corresponding to the search space in the most recently detected slot.

For example, in the M-DCI based M-TRP scenario, the terminal can determine the TCI state corresponding to the CSI-RS resource based on the first CORESET.

For example, in the M-DCI based M-TRP scenario, the terminal can determine the TCI state corresponding to the CSI-RS resource based on the CORESET corresponding to the PDCCH that schedules the CSI-RS resource.

For another example, in the M-DCI based M-TRP scenario, the terminal can determine the TCI state corresponding to the CSI-RS resource based on the CORESET that has the same CORESET pool index as the CORESET corresponding to the PDCCH that schedules the CSI-RS resource and that has the smallest CORESET ID among the CORESETs corresponding to the search space in the most recently detected slot.

In some embodiments, in response to N being equal to 1, and there being the at least two CORESETs corresponding to the different CORESET pool indexes, the TCI state corresponding to the CSI-RS resource can be determined based on other downlink signal. There is a time domain overlap between the other downlink signal and the CSI-RS resource. In addition, a CORESET corresponding to a PDCCH that schedules the other downlink signal and the CORESET corresponding to the PDCCH that schedules the CSI-RS resource have the same CORESET pool index.

For example, in the M-DCI based M-TRP scenario, the terminal can determine the TCI state corresponding to the CSI-RS resource based on other downlink signal. The other downlink signal can be the PDSCH. Alternatively, in various embodiment of the present disclosure, the PDSCH can be understood as a downlink signal for transmitting the PDSCH.

For example, in the M-DCI based M-TRP scenario, the terminal can determine the TCI state corresponding to the CSI-RS resource based on the PDSCH. The CORESET that schedules the PDSCH and the CORESET that schedules the CSI-RS resource correspond to the same CORESETPoolIndex. There is a time domain overlap between the PDSCH and the CSI-RS resource.

It can be understood that in this case, the terminal uses the same TCI state as the PDSCH as the TCI state corresponding to the CSI-RS resource.

The present disclosure provides a plurality of ways to determine the TCI state corresponding to the CSI-RS resource in the multi-DCI and multi-TRP scenario, thereby improving the transmission flexibility of the CSI-RS resource based on the unified TCI state.

In the method for configuring the transmission configuration indication state provided by embodiments of the present disclosure, the CORESET pool index is associated with a Physical Cell Identifier (PCI) of a serving cell; or, the CORESET pool index is associated with a PCI of a non-serving cell.

In some embodiments, the CORESET pool index is associated with the PCI of the serving cell.

For example, CORESETPoolIndex can be associated with the serving cell PCI.

In some embodiments, the CORESET pool index is associated with the PCI of the non-serving cell.

For example, the PCI associated with CORESETPoolIndex may be different from the serving cell PCI. That is, the PCI associated with CORESETPoolIndex may not be the serving cell PCI.

In the present disclosure, the CORESET pool index can be associated with the PCIs of a plurality of different cells to determine the TCI state corresponding to the CSI-RS resource in the corresponding multi-DCI and multi-TRP scenario in a plurality of manners, thereby improving the transmission flexibility of the CSI-RS resource based on the unified TCI state.

In the method for configuring the transmission configuration indication state provided by embodiments of the present disclosure, in response to N being greater than or equal to 1 and the PDCCH being not configured with a Single Frequency Network (SFN) scheme, the TCI state corresponding to the CSI-RS resource is determined by using at least one of manners: performing determination based on a configuration of a RRC signaling or a first MAC CE signaling; performing determination based on a default TCI state of a PDSCH; performing determination based on a first CORESET, the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active Bandwidth Part (BWP); or performing determination based on other downlink signal, and the other downlink signal is overlapped with the CSI-RS resource in the time domain.

In some embodiments, in an S-DCI based M-TRP scenario, for the indication information received by the terminal, some indication information can indicate one set of TCI states, and some indication information can indicate a plurality of sets of TCI states. In some cases, there may be at least one indication information indicating the plurality of sets of TCI states. Alternatively, if each indication information indicates one set of TCI states, there needs to be at least two indication information indicating different sets of TCI states.

In some embodiments, in response to N being greater than or equal to 1 and the PDCCH being not configured with the SFN scheme, the TCI state corresponding to the CSI-RS resource can be determined based on the configuration of the RRC signaling or the first MAC CE signaling.

For example, in an S-DCI based M-TRP scenario where the PDCCH is not configured with the SFN scheme, the terminal can determine the TCI state corresponding to the CSI-RS resource based on the configuration of the RRC signaling or the first MAC CE signaling.

For example, the network device configures, through the RRC signaling or the first MAC CE signaling, the TCI state corresponding to the CSI-RS resource. The terminal parses the received RRC signaling or the first MAC CE signaling to determine the TCI state corresponding to the CSI-RS resource.

In some embodiments, in response to N being greater than or equal to 1 and the PDCCH being not configured with the SFN scheme, the TCI state corresponding to the CSI-RS resource can be determined based on the default TCI state of the PDSCH.

For example, in an S-DCI based M-TRP scenario where the PDCCH is not configured with the SFN scheme, the terminal can determine the TCI state corresponding to the CSI-RS resource based on the default TCI state of the PDSCH. It can be understood that in this case, the terminal can directly use at least the first set of TCI states in default TCI states configured for the PDSCH as the TCI state corresponding to the CSI-RS resource.

It can be understood that the "at least the first set of TCI states" involved in various embodiments of the present disclosure can be expressed as whether it is one set of TCI states or a plurality of sets of TCI states, the first set of TCI states should be included. In other words, in the case of one set of TCI states, it is the first set of TCI states; in the case of the plurality of sets of TCI states, it includes the first set of TCI states and any other set or sets of TCI states.

For example, assuming that the PDSCH supports a plurality of sets of default TCI states, codepoints in a TCI state field can correspond to a plurality of sets of TCI states, a plurality of sets of TCI states corresponding to the minimum codepoint among different codepoints corresponding to the plurality of sets of TCI states can be determined, and at least a first set of TCI states among the plurality of sets of TCI states corresponding to the minimum codepoint can be determined as the TCI state corresponding to the CSI-RS resource.

For example, assuming that the PDSCH supports a plurality of sets of default TCI states, and the plurality of sets of default TCI states of the PDSCH are the N sets of TCI states determined based on the indication information, at least the first set of TCI states among the N sets of TCI states is determined as the TCI state of the CSI-RS resource.

For example, assuming that the PDSCH supports one set of default TCI states, and the set of default TCI states of the PDSCH is the first set (or the second set) of TCI states among the N sets of TCI states determined based on the indication information, then the first set (or the second set) of TCI states among the N sets of TCI states is determined as the TCI state of the CSI-RS resource.

The default TCI state may be specified by the protocol or pre-set, which is not limited in the present disclosure.

In some embodiments, in response to N being greater than or equal to 1 and the PDCCH being not configured with the SFN scheme, the TCI state corresponding to the CSI-RS resource can be determined based on the first CORESET. The first CORESET is the CORESET corresponding to the PDCCH that schedules the CSI-RS resource, or the first CORESET is the CORESET with the smallest CORESET index among the CORESETs corresponding to the search space in the most recently detected slot, or the first CORESET is the CORESET with the smallest index on the active BWP.

For example, in an S-DCI based M-TRP scenario where the PDCCH is not configured with the SFN scheme, the terminal can determine the TCI state corresponding to the CSI-RS resource based on the first CORESET.

For example, in an S-DCI based M-TRP scenario where the PDCCH is not configured with the SFN scheme, the terminal can determine the TCI state corresponding to the CSI-RS resource based on the CORESET corresponding to the PDCCH that schedules the CSI-RS resource.

For another example, in an S-DCI based M-TRP scenario where the PDCCH is not configured with the SFN scheme, the terminal can determine the TCI state corresponding to the CSI-RS resource based on the CORESET with the smallest CORESET ID corresponding to the search space in the most recently detected slot.

For yet another example, in an S-DCI based M-TRP scenario where the PDCCH is not configured with the SFN scheme, the terminal can determine the TCI state corresponding to the CSI-RS resource based on the CORESET with the smallest ID on the active BWP.

It can be understood that in this embodiment, if the first CORESET corresponds to a plurality of sets of TCI states, at least the first set of TCI states among the plurality of sets of TCI states can be determined as the TCI state corresponding to the CSI-RS resource.

In some embodiments, in response to N being greater than or equal to 1 and the PDCCH being not configured with the SFN scheme, the TCI state corresponding to the CSI-RS resource can be determined based on other downlink signal, and the other downlink signal overlaps with the CSI-RS resource in the time domain.

For example, in an S-DCI based M-TRP scenario where the PDCCH is not configured with the SFN scheme, the terminal can determine the TCI state corresponding to the CSI-RS resource based on other downlink signal, and the other downlink signal can be the PDSCH.

For example, in an S-DCI based M-TRP scenario where the PDCCH is not configured with the SFN scheme, the terminal can determine the TCI state corresponding to the CSI-RS resource based on the PDSCH. If the PDSCH is transmitted based on a plurality of sets of TCI states among the N sets of TCI states, the CSI-RS resource can be transmitted based on at least the first set of TCI states among the plurality of sets of TCI states. There is a time domain overlap between the PDSCH and the CSI-RS resource. If the PDSCH is transmitted based on one of the N sets of TCI states, the CSI-RS resource can be transmitted based on the same set of TCI states.

It can be understood that in this case, the terminal uses the same TCI state as the PDSCH as the TCI state corresponding to the CSI-RS resource.

The present disclosure provides a plurality of ways to determine the TCI state corresponding to the CSI-RS resource in a single-DCI and multi-TRP scenario where the PDCCH is not configured with the SFN, thereby improving the transmission flexibility of the CSI-RS resource based on the unified TCI state.

In the method for configuring the transmission configuration indication state provided by embodiments of the present disclosure, in response to N being greater than or equal to 1, and the PDCCH being configured with the SFN scheme and at least one CORESET being used to transmit the PDCCH based on a plurality of TCI states, the TCI state corresponding to the CSI-RS resource is determined by using at least one of manners: performing determination based on a configuration of a RRC signaling or a first MAC CE signaling; performing determination based on other downlink signal, and the other downlink signal is overlapped with the CSI-RS resource in the time domain; or performing determination based on at least a first set of TCI states in a first CORESET, and the first CORESET is a CORESET with the smallest CORESET index corresponding to a search space in the most recently detected slot.

In some embodiments, in an S-DCI based M-TRP scenario, for the indication information received by the terminal, some indication information can indicate one set of TCI states, and some indication information can indicate a plurality of sets of TCI states. In some cases, there may be at least one indication information indicating the plurality of sets of TCI states. Alternatively, if each indication information indicates one set of TCI states, there needs to be at least two indication information indicating different sets of TCI states.

In some embodiments, in response to N being greater than or equal to 1, and the PDCCH being configured with the SFN scheme, the at least one CORESET may be used to transmit the PDCCH based on the plurality of TCI states, and the TCI state corresponding to the CSI-RS resource can be determined based on the configuration of the RRC signaling or the first MAC CE signaling.

For example, in an S-DCI based M-TRP scenario where the PDCCH is configured with the SFN scheme, the terminal can determine the TCI state corresponding to the CSI-RS resource based on the configuration of the RRC signaling or the first MAC CE signaling.

For example, the network device configures, through the RRC signaling or the first MAC CE signaling, the TCI state corresponding to the CSI-RS resource. The terminal parses the received RRC signaling or the first MAC CE signaling to determine the TCI state corresponding to the CSI-RS resource.

In some embodiments, in response to N being greater than or equal to 1, and the PDCCH being configured with the SFN scheme, the at least one CORESET may be used to transmit the PDCCH based on the plurality of TCI states, and the TCI state corresponding to the CSI-RS resource can be determined based on other downlink signal, and the other downlink signal overlaps with the CSI-RS resource in the time domain.

For example, in an S-DCI based M-TRP scenario where the PDCCH is configured with the SFN scheme, the at least one CORESET may be used to transmit the PDCCH based on the plurality of TCI states, and the terminal can determine the TCI state corresponding to the CSI-RS resource based on other downlink signal. The other downlink signal can be the PDSCH.

For example, in an S-DCI based M-TRP scenario where the PDCCH is configured with the SFN scheme, the terminal can determine the TCI state corresponding to the CSI-RS resource based on the PDSCH. If the PDSCH is transmitted based on a plurality of sets of TCI states among the N sets of TCI states, the CSI-RS resource can be transmitted based on the plurality of sets of TCI states, or the CSI-RS resource can be transmitted based on at least the first set of TCI states among the plurality of sets of TCI states. There is a time domain overlap between the PDSCH and the CSI-RS resource. If the PDSCH is transmitted based on one of the N sets of TCI states, the CSI-RS resource can be transmitted based on the same set of TCI states.

It can be understood that in this case, the terminal uses the same TCI state as the PDSCH as the TCI state corresponding to the CSI-RS resource.

In some embodiments, in response to N being greater than or equal to 1, and the PDCCH being configured with the SFN scheme, the at least one CORESET may be used to transmit the PDCCH based on the plurality of TCI states, and the TCI state corresponding to the CSI-RS resource can be determined based on at least the first set of TCI states in the first CORESET. The first CORESET is the CORESET with the smallest CORESET index corresponding to the search space in the most recently detected slot.

For example, in an S-DCI based M-TRP scenario where the PDCCH is configured with the SFN scheme, the at least one CORESET can be used to perform the PDCCH transmission based on the plurality of TCI states, and the terminal can determine the TCI state corresponding to the CSI-RS resource based on at least the first set of TCI states in the first CORESET. The first CORESET can be the CORESET with the smallest CORESET ID corresponding to the search space in the most recently detected slot.

It can be understood that if the first CORESET has only one set of TCI states, the TCI state corresponding to the CSI-RS resource can be determined based on this set of TCI states. If the first CORESET has a plurality of sets of TCI states, the TCI state corresponding to the CSI-RS resource can be determined based on at least the first set of TCI states among the plurality of sets of TCI states.

The present disclosure provides a plurality of ways to determine the TCI state corresponding to the CSI-RS resource in a single-DCI and multi-TRP scenario where the PDCCH is configured with the SFN, thereby improving the transmission flexibility of the CSI-RS resource based on the unified TCI state.

In the method for configuring the transmission configuration indication state provided by embodiments of the present disclosure, in response to the TCI state corresponding to the CSI-RS resource being determined based on the configuration of the RRC signaling or the first MAC CE signaling, the configuration includes at least one of: configuring a first parameter for the CSI-RS resource or a CSI-RS resource set; configuring a CORESET pool index for the CSI-RS resource or the CSI-RS resource set; configuring an association relationship between the CSI-RS resource or the CSI-RS resource set and a TCI state of the CORESET pool index; or configuring an association relationship between the CSI-RS resource or the CSI-RS resource set and at least one of the N sets of TCI states.

In some embodiments, in response to the TCI state corresponding to the CSI-RS resource being determined based on the configuration of the RRC signaling or the first MAC CE signaling, the first parameter may be configured for the CSI-RS resource or the CSI-RS resource set.

For example, the first parameter may be followunifiedTCIstate. When the terminal determines, based on the configuration of the RRC signaling or the first MAC CE signaling, the TCI state corresponding to the CSI-RS resource, followunifiedTClstate may be configured by the RRC signaling or the first MAC CE signaling. The followunifiedTClstate may indicate whether the CSI-RS resource or CSI-RS resource set is followsunifiedTCIstate. For example, the unified TCI state is adopted or not adopted.

In some embodiments, in response to the TCI state corresponding to the CSI-RS resource being determined based on the configuration of the RRC signaling or the first MAC CE signaling, the CORESET pool index may be configured for the CSI-RS resource or the CSI-RS resource set.

For example, in the M-DCI based M-TRP scenario, when the terminal determines the TCI state corresponding to the CSI-RS resource based on the configuration of the RRC signaling or the first MAC CE signaling, CORESETPoolIndex may be configured for the CSI-RS resource or the CSI-RS resource set by the RRC signaling or the first MAC CE signaling. That is, the TCI state corresponding to the CSI-RS resource or the CSI-RS resource set can be the same as the TCI state of CORESETPoolIndex.

It can be understood that the TCI state of CORESETPoolIndex can represent the unified TCI state of CORESETPoolIndex. That is, the unified TCI state of CORESETPoolIndex is a TCI state corresponding to the codepoint indicated by the TCI state field in the DCI transmitted by the PDCCH in the CORESET of the CORESETPoolIndex.

In some embodiments, in response to the TCI state corresponding to the CSI-RS resource being determined based on the configuration of the RRC signaling or the first MAC CE signaling, the association relationship between the CSI-RS resource or the CSI-RS resource set and the TCI state of the CORESET pool index may be configured.

For example, in the M-DCI based M-TRP scenario, when the terminal determines the TCI state corresponding to the CSI-RS resource based on the configuration of the RRC signaling or the first MAC CE signaling, the association relationship between the CSI-RS resource or the CSI-RS resource set and the TCI state of CORESETPoolIndex can be configured by the RRC signaling or the first MAC CE signaling.

For example, it is possible to configure which TCI state of CORESETPoolIndex is used as the TCI state of the CSI-RS resource or the CSI-RS resource set. It can be understood that in the scenario of M-TRP of M-DCI, there may be a plurality of CORESET pools, thus the corresponding CORESET can be indicated by CORESETPoolIndex, so that the TCI state of the CORESET pool is used as the TCI state of the CSI-RS resource or the CSI-RS resource set.

In some embodiments, in response to the TCI state corresponding to the CSI-RS resource being determined based on the configuration of the RRC signaling or the first MAC CE signaling, the association relationship between the CSI-RS resource or the CSI-RS resource set and at least one of the N sets of TCI states can be configured.

For example, in the S-DCI based M-TRP scenario, when the terminal determines the TCI state corresponding to the CSI-RS resource based on the configuration of the RRC signaling or the first MAC CE signaling, the association relationship between the CSI-RS resource or the CSI-RS resource set and at least one of the N sets of TCI states can be configured by the RRC signaling or the first MAC CE signaling.

For example, it is possible to configure which set or sets of TCI states among the N sets of TCI states are used as the TCI state of the CSI-RS resource or the CSI-RS resource set. It can be understood that in the scenario of M-TRP of S-DCI, there is only one CORESET pool, so it is possible to configure which set or sets of TCI states among the N sets of TCI states are used as the TCI state of the CSI-RS resource or the CSI-RS resource set.

The present disclosure provides a plurality of ways to determine the CSI-RS resource based on the configuration of the RRC signaling or first MAC CE signaling, thereby improving the transmission flexibility of the CSI-RS resource based on the unified TCI state.

In the method for configuring the transmission configuration indication state provided by embodiments of the present disclosure, in response to the TCI state corresponding to the CSI-RS resource being determined based on the first CORESET, and/or in response to the TCI state corresponding to the CSI-RS resource being determined based on the default TCI state of the PDSCH, a time offset between the PDCCH that schedules the CSI-RS resource and the CSI-RS resource is less than a first threshold.

In some embodiments, in response to the TCI state corresponding to the CSI-RS resource being determined based on the first CORESET, and/or in response to the TCI state corresponding to the CSI-RS resource being determined based on the default TCI state of the PDSCH, the time offset (also referred as to offset) between the PDCCH that schedules the CSI-RS resource and the CSI-RS resource is less than the first threshold.

For example, when the terminal determines, based on the first CORESET, the TCI state corresponding to the CSI-RS resource, the offset between the PDCCH that schedules the CSI-RS resource and the CSI-RS resource is less than the first threshold.

For another example, when the terminal determines, based on the default TCI state of the PDSCH, the TCI state corresponding to the CSI-RS resource, the offset between the PDCCH that schedules the CSI-RS resource and the CSI-RS resource is less than the first threshold.

It can be understood that in this embodiment, a time period corresponding to the first threshold can be used by the terminal to demodulate the PDCCH to determine the TCI state indicated by the PDCCH. When the offset between the PDCCH that schedules the CSI-RS resource and the CSI-RS resource is less than the first threshold, it can be considered that the terminal has not yet completed demodulation of the PDCCH, and therefore cannot determine the TCI state indicated by the PDCCH. In this case, the terminal can only use the default value, such as the default TCI state based on the first CORESET or the PDSCH, to determine the TCI state corresponding to the CSI-RS resource.

The present disclosure is applicable to a case where the CSI-RS resource is determined when the terminal cannot determine the TCI state through the PDCCH, thereby improving the transmission flexibility of the CSI-RS resource based on the unified TCI state.

In the method for configuring the transmission configuration indication state provided by embodiments of the present disclosure, in response to the TCI state corresponding to the CSI-RS resource being determined based on other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

In some embodiments, in response to the TCI state corresponding to the CSI-RS resource being determined based on other downlink signal, the offset between the other downlink signal and the PDCCH that schedules the other downlink signal is greater than the second threshold, and/or the offset between the CSI-RS resource and the PDCCH that schedules the CSI-RS resource is greater than the third threshold.

The other downlink signal may be the PDSCH.

For example, when the terminal determines the TCI state corresponding to the CSI-RS resource based on other downlink signal, the offset between the other downlink signal and the PDCCH that schedules the other downlink signal is greater than the second threshold.

For another example, when the terminal determines the TCI state corresponding to the CSI-RS resource based on other downlink signal, the offset between the CSI-RS resource and the PDCCH that schedules the CSI-RS resource is greater than the third threshold.

For yet another example, when the terminal determines the TCI state corresponding to the CSI-RS resource based on other downlink signal, the offset between the other downlink signal and the PDCCH that schedules the other downlink signal is greater than the second threshold, and the offset between the CSI-RS resource and the PDCCH that schedules the CSI-RS resource is greater than the third threshold.

It can be understood that in this embodiment, the offset between other downlink signal and the PDCCH that schedules the other downlink signal is greater than the second threshold, and/or the offset between the CSI-RS resource and the PDCCH that schedules the CSI-RS resource is greater than the third threshold, which can indicate that the terminal can determine the TCI state of the PDSCH indicated by the PDCCH. Therefore, the terminal can use the TCI state of the PDSCH as the TCI state corresponding to the CSI-RS resource.

The present disclosure is applicable to a case where the CSI-RS resource is determined when the terminal can determine the TCI state through the PDCCH, thereby improving the transmission flexibility of the CSI-RS resource based on the unified TCI state.

In the method for configuring the transmission configuration indication state provided by embodiments of the present disclosure, receiving the indication information includes: receiving at least one indication information, each of the at least one indication information is used to indicate K sets of TCI states, K values corresponding to different indication information are the same or different, and K is a positive integer; the N sets of TCI states are determined based on K sets of TCI states indicated by first indication information, and the at least one indication information includes the first indication information; or, the N sets of TCI states are determined based on K sets of TCI states indicated by a plurality of indication information.

In some embodiments, the terminal may receive one or more indication information sent by the network device. Each indication information received by the terminal may be used to indicate the K sets of TCI states. It can be understood that the K values corresponding to different indication information may be the same or different, and K is a positive integer.

For example, the terminal may receive one indication information sent by the network device, and this indication information indicates K1 sets of TCI states. For another example, the terminal may receive a plurality of indication information sent by the network device, such as two indication information, one of the two indication information indicates K2 sets of TCI states, and the other indication information indicates K3 sets of TCI states. It can be understood that K2 and K3 may be the same or different.

In some embodiments, the N sets of TCI states may be determined based on the K sets of TCI states indicated by the first indication information, and the at least one indication information includes the first indication information.

It can be understood that the terminal can determine the N sets of TCI states based on the K sets of TCI states indicated by the first indication information among the plurality of indication information which is sent at a certain time.

For example, the terminal can determine the N sets of TCI states based on the K sets of TCI states indicated by the first indication information, and the first indication information is one of the at least one indication information received by the terminal.

Here, K may be the same as or different from N.

In some embodiments, the N sets of TCI states are determined based on the K sets of TCI states indicated by the plurality of indication information.

It can be understood that the terminal can determine the N sets of TCI states based on the K sets of TCI states indicated by the plurality of indication information.

For example, the plurality of indication information is assumed to be two indication information. The terminal can determine the N sets of TCI states based on the K1 set of TCI states indicated by the first indication information and the K2 set of TCI states indicated by the second indication information. K1 can be the same as or different from N, and K2 can be the same as or different from N. For example, the first indication information indicates the first set of TCI states and the second set of TCI states, and the second indication information indicates the first set of TCI states and the third set of TCI states. It can be considered that the first set of TCI states indicated by the second indication information is used to update the first set of TCI states indicated by the first indication information. The N sets of TCI states determined by the terminal according to the first indication information and the second indication include the updated first set of TCI states, the second set of TCI states, and the third set of TCI states.

Alternatively, the above example only illustratively describes the case where K1 and K2 are the same. In other examples, K1 and K2 may be different. For example, the first indication information indicates the first set of TCI states, the second set of TCI states, and the third set of TCI states, and the second indication information indicates the fourth set of TCI states and the fifth set of TCI states. The N sets of TCI states determined by the terminal according to the first indication information and the second indication include the first set of TCI states, the second set of TCI states, the third set of TCI states, the fourth set of TCI states, and the fifth set of TCI states.

For another example, the first indication information indicates the first set of TCI states and the second set of TCI states, and the second indication information indicates the updated second set of TCI states. The N sets of TCI states determined by the terminal according to the first indication information and the second indication include the first set of TCI states indicated by the first indication information and the updated second set of TCI states indicated by the second indication information.

It can be understood that the present disclosure does not limit K1 and K2.

The present disclosure provides a plurality of ways to determine the N sets of TCI states, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, in response to the N sets of TCI states being determined based on the K sets of TCI states indicated by the first indication information, the first indication information is indication information most recently received.

In some embodiments, in response to the N sets of TCI states being determined based on the K sets of TCI states indicated by the first indication information, the first indication information may be the indication information most recently received by the terminal.

For example, the terminal can determine the N sets of TCI states according to the K sets of TCI states indicated by the most recently received indication information. It is understood that the most recently received indication information by the terminal may be the last indication information received by the terminal at or before the current moment.

It can be understood that for the K sets of TCI states indicated by the indication information most recently received by the terminal, the K value may be the same as the N value, or may be different from the N value, for example, smaller than the N value.

It should be understood that N in the N sets of TCI states determined by the terminal can be determined based on the maximum K value, or can be determined based on the K values corresponding to different indication information, which is not limited by the present disclosure.

In the present disclosure, the N sets of TCI states are determined through the most recently received indication information, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, in response to the N sets of TCI states being determined based on the K sets of TCI states indicated by the plurality of indication information, the plurality of indication information includes the first indication information and second indication information; the first indication information is indication information most recently received; the second indication information is indication information before the first indication information, and at least one set of TCI states in the second indication information is not updated in the first indication information.

In some embodiments, the terminal may respond to the N sets of TCI states being determined based on the K sets of TCI states indicated by the plurality of indication information, and the plurality of indication information may include the first indication information and the second indication information.

In some embodiments, the first indication information may be the indication information most recently received by the terminal. The second indication information may be the indication information received by the terminal before the first indication information, and the at least one set of TCI states in the second indication information may not be updated in the first indication information. That is, the first indication information may not include the at least one set of TCI states in the second indication information.

For example, the terminal first receives the second indication information, and the second indication information includes the first set of TCI states and the second set of TCI states. After that, the terminal receives the first indication information. The first indication information includes the second set of TCI states. Or, the first indication information includes the third set of TCI states and the fourth set of TCI states. That is, the second indication information should include at least one set of TCI states that is not included in the first indication information.

If the first indication information includes a TCI state that is the TCI state in the second indication information, it can be considered that the first indication information updates the TCI state in the second indication information.

In the present disclosure, the N sets of TCI states are determined by receiving the plurality of indication information, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, the indication information is carried by a second MAC CE, the second MAC CE is used to indicate the K sets of TCI states, and the K sets of TCI states correspond to a codepoint of a TCI state field in a first DCI.

In some embodiments, the indication information may be carried by the second MAC CE. The second MAC CE may be used to indicate the K sets of TCI states. The K sets of TCI states may correspond to the codepoint in the TCI state field in the first DCI. In this case, the TCI state field of the first DCI does not need to further indicate the codepoint.

It can be understood that if K is greater than 1, the activated TCI state of each codepoint must be greater than 1.

If K is greater than or equal to 1, the number of activated TCI states of each codepoint may be greater than or equal to one TCI state. For example, there may be one codepoint corresponding to a plurality of sets of TCI states, and the remaining codepoints may update one or more of the plurality of sets of TCI states. If a set of TCI states is not updated, the terminal continues to use the old TCI state for transmission of the physical shared channel.

The present disclosure provides a way to indicate the TCI state by carrying the indication information through the MAC CE, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

In some embodiments, the indication information may be carried by the third MAC CE and the second DCI. The third MAC CE may be used to indicate the plurality of K sets of TCI states. It can be understood that each K set of TCI states corresponds to a codepoint. In other words, the third MAC CE indicates the K sets of TCI states corresponding to each of the plurality of codepoints. The TCI state field in the second DCI is used to indicate one of the plurality of codepoints, so as to further indicate a specific one among the plurality of K sets of TCI states.

It can be understood that for the K sets of TCI states corresponding to each of the plurality of codepoints, the values of K can be the same or different.

It should be understood that if K is greater than 1, the activated TCI state of each codepoint must be greater than 1.

If K is greater than or equal to 1, the number of activated TCI states of each codepoint may be greater than or equal to one TCI state. For example, there may be one codepoint corresponding to a plurality of sets of TCI states, and the remaining codepoints may update one or more of the plurality of sets of TCI states. If a set of TCI states is not updated, the terminal continues to use the old TCI state for transmission of the physical shared channel.

The present disclosure provides a way to indicate the TCI state by carrying the indication information through the MAC CE and the DCI, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, each set of TCI states includes at least one of: an UL TCI state and/or a DL TCI state; or a joint TCI state.

In some embodiments, each set of TCI states may include the UL TCI state and/or the DL TCI state.

For example, a set of TCI states may include the UL TCI state. For another example, a set of TCI states may include the DL TCI state. For yet another example, a set of TCI states may include the UL TCI state and the DL TCI state.

In some embodiments, each set of TCI states may include the joint TCI state.

It can be understood that the joint TCI state can be used to jointly indicate both the uplink TCI state and the downlink TCI state.

The present disclosure provides a plurality of representations of a set of TCI states, so that in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, the CSI-RS resource includes at least one of: a resource for Channel State Information (CSI) measurement; or a CSI-RS resource for beam management.

In some embodiments, the CSI-RS resource may include the resource for the CSI measurement.

In some embodiments, the CSI-RS resource may include the CSI-RS resource for the beam management.

In some embodiments, the CSI-RS resource may include the resource for the CSI measurement and the CSI-RS resource used for the beam management.

The present disclosure provides a variety of possible forms of the CSI-RS resource, and in the multi-TRP scenario, the TCI state corresponding to the CSI-RS resource can be determined according to the unified TCI state, thereby improving the transmission flexibility of the CSI-RS resource based on the unified TCI state.

Based on the same concept, the present disclosure further provides a method for configuring a transmission configuration indication state performed by a network device.

FIG. 3 shows a flowchart of another method for configuring a transmission configuration indication state according to an example embodiment. As shown in FIG. 3, the method is performed by a network device and may include steps S11 and S22.

In the step S11, indication information is sent.

In some embodiments, the network device may send the indication information. The indication information may be used to determine the unified TCI state, and the unified TCI state may include N sets of TCI states, where N is a positive integer.

For example, the network device may send one or more indication information to the terminal, so that the terminal may determine the N sets of TCI states according to K sets of TCI states indicated by individual indication information among the one or more indication information.

For example, the network device may send one indication information to indicate to the terminal to determine the N sets of TCI states. It can be understood that the K sets of TCI states indicated by the indication information are used as the N sets of TCI states.

For another example, the network device may indicate, by sending a plurality of indication information, to the terminal to determine the N sets of TCI states. For example, the first indication information indicates two sets of TCI states, including a first set of TCI states and a second set of TCI states. The second indication information may indicate one set of TCI states, and the one set of TCI states indicated by the second indication information may be an update of the first set of TCI states among the two sets of TCI states indicated by the first indication information. Then the N sets of TCI states may include only the one set of TCI states indicated by the second indication information; or the N sets of TCI states include the second set of TCI states indicated by the first indication information, and the first set of TCI states indicated by the second indication information.

It can be understood that in each embodiment of the present disclosure, each of the at least one indication information can be used to indicate the K sets of TCI states. The network device can indicate, through the K sets of TCI states indicated by each of the at least one indication information, to the terminal to determine the N sets of TCI states.

Alternatively, the one set of TCI states indicated by the second indication information may also be an update of the second set of TCI states among the two sets of TCI states indicated by the first indication information. It should be understood that the first set of TCI state and/or the second set of TCI state included in the N sets of TCI states should be the latest first set of TCI states and the latest second set of TCI states indicated by the plurality of indication information, respectively.

For another example, the first indication information indicates one set of TCI states, for example, corresponding to the first set of TCI states, and the second indication information indicates one set of TCI states, for example, corresponding to the second set of TCI states. The N sets of TCI states may include the first set of TCI states and the second set of TCI states indicated by the two indication information, respectively. The first set of TCI states and the second set of TCI states can be understood as corresponding to different TRPs, or corresponding to different bit positions contained in the MAC CE or corresponding to different bit indication identities or other features, which is not limited by the present disclosure.

In the step S22, a TCI state corresponding to the CSI-RS resource is determined.

In some embodiments, the network device may determine the TCI state corresponding to the CSI-RS resource. For example, the network device may determine the TCI state corresponding to the CSI-RS resource based on the N sets of TCI states.

For example, the network device determines the TCI state corresponding to the CSI-RS resource based on one or more of the N sets of TCI states.

In some embodiments, N may be greater than or equal to one.

It can be understood that this embodiment can correspond to an M-DCI based M-TRP scenario, that is, a multi-DCI and multi-TRP scenario.

In some embodiments, N may be equal to 1 and the terminal has at least two CORESETs corresponding to different CORESET pool indexes, where the index may be an ID or an index.

For example, the CORESET pool index may be CORESETPoolIndex.

It can be understood that this embodiment can correspond to an S-DCI based M-TRP scenario, that is, a single DCI (S-DCI) and multi-TRP scenario.

The present disclosure determines the TCI state corresponding to the CSI-RS resource in the multi-TRP scenario, thereby improving the transmission flexibility of the CSI-RS resource based on the unified TCI state.

In the method for configuring the transmission configuration indication state provided by embodiments of the present disclosure, in response to N being equal to 1 and there being at least two CORESETs corresponding to different CORESET pool indexes, the TCI state corresponding to the CSI-RS resource is determined by using at least one of manners: sending a RRC signaling or a first MAC CE signaling to configure the TCI state corresponding to the CSI-RS resource; configuring a TCI state of a first CORESET, the first CORESET is used by a terminal to determine the TCI state corresponding to the CSI-RS resource, the first CORESET is a CORESET corresponding to a PDCCH that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or sending other downlink signal, the other downlink signal is used by the terminal to determine the TCI state corresponding to the CSI-RS resource, the other downlink signal is overlapped with the CSI-RS resource in the time domain, and a CORESET corresponding to a PDCCH that schedules the other downlink signal and the CORESET corresponding to the PDCCH that schedules the CSI-RS resource have the same CORESET pool index.

It should be noted that the present disclosure does not limit an execute order of sending the RRC signaling or the first MAC CE signaling to configure the TCI state corresponding to the CSI-RS resource, and determining the N sets of TCI states based on the indication information. That is to say, the N sets of TCI states can be determined based on the indication information first, and then the RRC signaling or the first MAC CE signaling can be sent to configure the TCI state corresponding to the CSI-RS resource; or, the RRC signaling or the first MAC CE signaling can be sent first to configure the TCI state corresponding to the CSI-RS resource, and then the N sets of TCI states can be determined based on the indication information, which is not limited by the present disclosure.

In some embodiments, for the M-DCI based M-TRP scenario, since each TRP is indicated by its corresponding DCI, the indication information sent by the network device only indicates the TCI state corresponding to the TRP. In other words, only one set of TCI states needs to be indicated, in which case N can be 1. However, since different TRPs indicate respective TCI states through their corresponding PDCCHs, there are at least two CORESETs corresponding to different CORESETPoolIndex.

In some embodiments, in response to N being equal to 1, and there being the at least two CORESETs corresponding to the different CORESET pool indexes, the configuration of the RRC signaling or the first MAC CE signaling may be sent to determine the TCI state corresponding to the CSI-RS resource.

For example, in the M-DCI based M-TRP scenario, the RRC signaling or the first MAC CE signaling can be sent, so that the terminal determines the TCI state corresponding to the CSI-RS resource based on the configuration of the RRC signaling or the first MAC CE signaling.

For example, the network device configures, through the RRC signaling or the first MAC CE signaling, the TCI state corresponding to the CSI-RS resource, so as to determine the TCI state corresponding to the CSI-RS resource.

In some embodiments, in response to N being equal to 1, and there being the at least two CORESETs corresponding to the different CORESET pool indexes, the TCI state of the first CORESET can be configured. The first CORESET can be used by the terminal to determine the TCI state corresponding to the CSI-RS resource. The first CORESET can be the CORESET corresponding to the PDCCH that schedules the CSI-RS resource. Alternatively, the first CORESET can be the CORESET that has the same CORESET pool index as the CORESET corresponding to the PDCCH that schedules the CSI-RS resource and that has the smallest CORESET index among the CORESETs corresponding to the search space in the most recently detected slot.

For example, in the M-DCI based M-TRP scenario, the TCI state of the first CORESET can be configured so that the terminal can determine the TCI state corresponding to the CSI-RS resource based on the CORESET.

For example, in the M-DCI based M-TRP scenario, the CORESET corresponding to the PDCCH that schedules the CSI-RS resource can be configured so that the terminal can determine the TCI state corresponding to the CSI-RS resource based on this CORESET.

For another example, in the M-DCI based M-TRP scenario, the CORESET that has the same CORESET pool index as the CORESET corresponding to the PDCCH that schedules the CSI-RS resource and that has the smallest CORESET index among the CORESETs corresponding to the search space in the most recently detected slot can be configured so that the terminal can determine the TCI state corresponding to the CSI-RS resource based on this CORESET.

In some embodiments, in response to N being equal to 1, and there being the at least two CORESETs corresponding to the different CORESET pool indexes, other downlink signal may be sent. The designated other downlink signal may be used by the terminal to determine the TCI state corresponding to the CSI-RS resource. There is a time domain overlap between the other downlink signal and the CSI-RS resource. In addition, a CORESET corresponding to a PDCCH that schedules the other downlink signal and the CORESET corresponding to the PDCCH that schedules the CSI-RS resource have the same CORESET pool index.

For example, in the M-DCI based M-TRP scenario, other downlink signal may be sent so that the terminal can determine the TCI state corresponding to the CSI-RS resource based on the other downlink signal. The other downlink signal may be the PDSCH.

For example, in the M-DCI based M-TRP scenario, the PDSCH can be sent so that the terminal can determine the TCI state corresponding to the CSI-RS resource based on the PDSCH. The CORESET that schedules the PDSCH and the CORESET that schedules the CSI-RS resource correspond to the same CORESETPoolIndex. There is a time domain overlap between the PDSCH and the CSI-RS resource.

It can be understood that in this case, the same TCI state as that of the PDSCH can be used as the TCI state corresponding to the CSI-RS resource.

The present disclosure provides a plurality of ways to determine the TCI state corresponding to the CSI-RS resource in the multi-DCI and multi-TRP scenario, thereby improving the transmission flexibility of the CSI-RS resource based on the unified TCI state.

In the method for configuring the transmission configuration indication state provided by embodiments of the present disclosure, the CORESET pool index is associated with a PCI of a serving cell; or, the CORESET pool index is associated with a PCI of a non-serving cell.

In some embodiments, the CORESET pool index is associated with the PCI of the serving cell.

For example, CORESETPoolIndex can be associated with the serving cell PCI.

In some embodiments, the CORESET pool index is associated with the PCI of the non-serving cell.

For example, the PCI associated with CORESETPoolIndex may be different from the serving cell PCI. That is, the PCI associated with CORESETPoolIndex may not be the serving cell PCI.

In the present disclosure, the CORESET pool index can be associated with the PCIs of a plurality of different cells to determine the TCI state corresponding to the CSI-RS resource in the corresponding multi-DCI and multi-TRP scenario in a plurality of manners, thereby improving the transmission flexibility of the CSI-RS resource based on the unified TCI state.

In the method for configuring the transmission configuration indication state provided by embodiments of the present disclosure, in response to N being greater than or equal to 1 and the PDCCH being not configured with an SFN scheme, the TCI state corresponding to the CSI-RS resource is determined by using at least one of manners: sending a RRC signaling or a first MAC CE signaling to configure the TCI state corresponding to the CSI-RS resource; performing determination based on a default TCI state of a PDSCH; configuring a TCI state of a first CORESET, the first CORESET is used by the terminal to determine the TCI state corresponding to the CSI-RS resource, the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active BWP; or sending other downlink signal, the other downlink signal is used by the terminal to determine the TCI state corresponding to the CSI-RS resource, and the other downlink signal is overlapped with the CSI-RS resource in the time domain.

In some embodiments, in an S-DCI based M-TRP scenario, for the indication information sent by the network device, some indication information can indicate one set of TCI states, and some indication information can indicate a plurality of sets of TCI states. In some cases, there may be at least one indication information indicating the plurality of sets of TCI states. Alternatively, if each indication information indicates one set of TCI states, there needs to be at least two indication information indicating different sets of TCI states.

In some embodiments, in response to N being greater than or equal to 1 and the PDCCH being not configured with the SFN scheme, the configuration of the RRC signaling or the first MAC CE signaling may be sent to determine the TCI state corresponding to the CSI-RS resource.

For example, in an S-DCI based M-TRP scenario where the PDCCH is not configured with the SFN scheme, the RRC signaling or the first MAC CE signaling can be sent, so that the terminal determines the TCI state corresponding to the CSI-RS resource based on the configuration of the RRC signaling or the first MAC CE signaling.

For example, the network device configures, through the RRC signaling or the first MAC CE signaling, the TCI state corresponding to the CSI-RS resource, so as to determine the TCI state corresponding to the CSI-RS resource.

In some embodiments, in response to N being greater than or equal to 1 and the PDCCH being not configured with the SFN scheme, the TCI state corresponding to the CSI-RS resource can be determined based on the default TCI state of the PDSCH.

For example, in an S-DCI based M-TRP scenario where the PDCCH is not configured with the SFN scheme, the TCI state corresponding to the CSI-RS resource can be determined based on the default TCI state of the PDSCH. It can be understood that in this case, at least the first set of TCI states in default TCI states configured for the PDSCH can be directly used as the TCI state corresponding to the CSI-RS resource.

For example, assuming that the PDSCH supports a plurality of sets of default TCI states, codepoints in a TCI state field can correspond to a plurality of sets of TCI states, a plurality of sets of TCI states corresponding to the minimum codepoint among different codepoints corresponding to the plurality of sets of TCI states can be determined, and at least a first set of TCI states among the plurality of sets of TCI states corresponding to the minimum codepoint can be determined as the TCI state corresponding to the CSI-RS resource.

For example, assuming that the PDSCH supports a plurality of sets of default TCI states, and the plurality of sets of default TCI states of the PDSCH are the N sets of TCI states determined based on the indication information, at least the first set of TCI states among the N sets of TCI states is determined as the TCI state of the CSI-RS resource.

For example, assuming that the PDSCH supports one set of default TCI states, and the set of default TCI states of the PDSCH is the first set (or the second set) of TCI states among the N sets of TCI states determined based on the indication information, then the first set (or the second set) of TCI states among the N sets of TCI states is determined as the TCI state of the CSI-RS resource.

The default TCI state may be specified by the protocol or pre-set, which is not limited in the present disclosure.

In some embodiments, in response to N being greater than or equal to 1 and the PDCCH being not configured with the SFN scheme, the TCI state of the first CORESET can be configured. The first CORESET can be used by the terminal to determine the TCI state corresponding to the CSI-RS resource. The first CORESET is the CORESET corresponding to the PDCCH that schedules the CSI-RS resource, or the first CORESET is the CORESET with the smallest CORESET index among the CORESETs corresponding to the search space in the most recently detected slot, or the first CORESET is the CORESET with the smallest index on the active BWP.

For example, in an S-DCI based M-TRP scenario where the PDCCH is not configured with the SFN scheme, the TCI state of the first CORESET can be configured so that the terminal can determine the TCI state corresponding to the CSI-RS resource based on the CORESET.

For example, in an S-DCI based M-TRP scenario where the PDCCH is not configured with the SFN scheme, the CORESET corresponding to the PDCCH that schedules the CSI-RS resource can be configured so that the terminal can determine the TCI state corresponding to the CSI-RS resource based on this CORESET.

For another example, in an S-DCI based M-TRP scenario where the PDCCH is not configured with the SFN scheme, the CORESET with the smallest CORESET ID corresponding to the search space in the most recently detected slot can be configured so that the terminal can determine the TCI state corresponding to the CSI-RS resource based on this CORESET.

For yet another example, in an S-DCI based M-TRP scenario where the PDCCH is not configured with the SFN scheme, the CORESET with the smallest ID on the active BWP can be configured so that the terminal can determine the TCI state corresponding to the CSI-RS resource based on this CORESET.

It can be understood that in this embodiment, if the first CORESET corresponds to a plurality of sets of TCI states, at least the first set of TCI states among the plurality of sets of TCI states can be determined as the TCI state corresponding to the CSI-RS resource.

In some embodiments, in response to N being greater than or equal to 1 and the PDCCH being not configured with the SFN scheme, other downlink signal may be sent. The designated other downlink signal may be used by the terminal to determine the TCI state corresponding to the CSI-RS resource. There is a time domain overlap between the other downlink signal and the CSI-RS resource.

For example, in an S-DCI based M-TRP scenario where the PDCCH is not configured with the SFN scheme, other downlink signal may be sent so that the terminal can determine the TCI state corresponding to the CSI-RS resource based on the other downlink signal. The other downlink signal may be the PDSCH.

For another example, in an S-DCI based M-TRP scenario where the PDCCH is not configured with the SFN scheme, the PDSCH can be sent so that the terminal can determine the TCI state corresponding to the CSI-RS resource based on the PDSCH. If the PDSCH is transmitted based on a plurality of sets of TCI states among the N sets of TCI states, the CSI-RS resource can be transmitted based on at least the first set of TCI states among the plurality of sets of TCI states. There is a time domain overlap between the PDSCH and the CSI-RS resource. If the PDSCH is transmitted based on one of the N sets of TCI states, the CSI-RS resource can be transmitted based on the same set of TCI states.

It can be understood that in this case, the same TCI state as that of the PDSCH can be used as the TCI state corresponding to the CSI-RS resource.

The present disclosure provides a plurality of ways to determine the TCI state corresponding to the CSI-RS resource in a single-DCI and multi-TRP scenario where the PDCCH is not configured with the SFN, thereby improving the transmission flexibility of the CSI-RS resource based on the unified TCI state.

In the method for configuring the transmission configuration indication state provided by embodiments of the present disclosure, in response to N being greater than or equal to 1, and the PDCCH being configured with the SFN scheme and at least one CORESET being used to transmit the PDCCH based on a plurality of TCI states, the TCI state corresponding to the CSI-RS resource is determined by using at least one of manners: sending a RRC signaling or a first MAC CE signaling to configure the TCI state corresponding to the CSI-RS resource; sending other downlink signal, the other downlink signal is used by the terminal to determine the TCI state corresponding to the CSI-RS resource, and the other downlink signal is overlapped with the CSI-RS resource in the time domain; or configuring at least a first set of TCI states in a first CORESET, at least the first set of TCI states in the first CORESET is used by the terminal to determine the TCI state corresponding to the CSI-RS resource, and the first CORESET is a CORESET with the smallest CORESET index corresponding to a search space in the most recently detected slot.

In some embodiments, in an S-DCI based M-TRP scenario, for the indication information sent by the network device, some indication information can indicate one set of TCI states, and some indication information can indicate a plurality of sets of TCI states. In some cases, there may be at least one indication information indicating the plurality of sets of TCI states. Alternatively, if each indication information indicates one set of TCI states, there needs to be at least two indication information indicating different sets of TCI states.

In some embodiments, in response to N being greater than or equal to 1, and the PDCCH being configured with the SFN scheme, the at least one CORESET may be used to transmit the PDCCH based on the plurality of TCI states, and the configuration of the RRC signaling or the first MAC CE signaling may be sent to determine the TCI state corresponding to the CSI-RS resource.

For example, in an S-DCI based M-TRP scenario where the PDCCH is configured with the SFN scheme, the configuration of the RRC signaling or the first MAC CE signaling can be sent so that the terminal determines the TCI state corresponding to the CSI-RS resource based on the RRC signaling or the first MAC CE signaling.

For example, the network device configures, through the RRC signaling or the first MAC CE signaling, the TCI state corresponding to the CSI-RS resource, so as to determine the TCI state corresponding to the CSI-RS resource.

In some embodiments, in response to N being greater than or equal to 1, and the PDCCH being configured with the SFN scheme, the at least one CORESET may be used to transmit the PDCCH based on the plurality of TCI states, and other downlink signal may be sent. The designated other downlink signal may be used by the terminal to determine the TCI state corresponding to the CSI-RS resource. There is a time domain overlap between the other downlink signal and the CSI-RS resource.

For example, in an S-DCI based M-TRP scenario where the PDCCH is configured with the SFN scheme, the at least one CORESET may be used to transmit the PDCCH based on the plurality of TCI states, and other downlink signal may be sent so that the terminal can determine the TCI state corresponding to the CSI-RS resource based on the other downlink signal. The other downlink signal may be the PDSCH.

For example, in an S-DCI based M-TRP scenario where the PDCCH is configured with the SFN scheme, the PDSCH can be sent so that the terminal can determine the TCI state corresponding to the CSI-RS resource based on the PDSCH. If the PDSCH is transmitted based on a plurality of sets of TCI states among the N sets of TCI states, the CSI-RS resource can be transmitted based on the plurality of sets of TCI states, or the CSI-RS resource can be transmitted based on at least the first set of TCI states among the plurality of sets of TCI states. There is a time domain overlap between the PDSCH and the CSI-RS resource. If the PDSCH is transmitted based on one of the N sets of TCI states, the CSI-RS resource can be transmitted based on the same set of TCI states.

It can be understood that in this case, the same TCI state as that of the PDSCH can be used as the TCI state corresponding to the CSI-RS resource.

In some embodiments, in response to N being greater than or equal to 1, and the PDCCH being configured with the SFN scheme, the at least one CORESET may be used to transmit the PDCCH based on the plurality of TCI states, and at least the first set of TCI states in the first CORESET can be configured. At least the first set of TCI states in the first CORESET can be used by the terminal to determine the TCI state corresponding to the CSI-RS resource. The first CORESET is the CORESET with the smallest CORESET index corresponding to the search space in the most recently detected slot.

For example, in an S-DCI based M-TRP scenario where the PDCCH is configured with the SFN scheme, the at least one CORESET may be used to transmit the PDCCH based on the plurality of TCI states, and at least the first set of TCI states in the first CORESET can be configured so that the terminal can determine the TCI state corresponding to the CSI-RS resource based on at least the first set of TCI states in this CORESET. The first CORESET can be the CORESET with the smallest CORESET ID corresponding to the search space in the most recently detected slot.

It can be understood that if the first CORESET has only one set of TCI states, the network device can configure this set of TCI states, so that the terminal determines the TCI state corresponding to the CSI-RS resource based on this set of TCI states. If the first CORESET has a plurality of sets of TCI states, the network device can configure at least the first set of TCI states among the plurality of sets of TCI states, so that the terminal determines the TCI state corresponding to the CSI-RS resource based on at least the first set of TCI states.

The present disclosure provides a plurality of ways to determine the TCI state corresponding to the CSI-RS resource in a single-DCI and multi-TRP scenario where the PDCCH is configured with the SFN, thereby improving the transmission flexibility of the CSI-RS resource based on the unified TCI state.

In the method for configuring the transmission configuration indication state provided by embodiments of the present disclosure, in response to sending the RRC signaling or the first MAC CE signaling to configure the TCI state corresponding to the CSI-RS resource, the configuration includes at least one of: configuring a first parameter for the CSI-RS resource or a CSI-RS resource set; configuring a CORESET pool index for the CSI-RS resource or the CSI-RS resource set; configuring an association relationship between the CSI-RS resource or the CSI-RS resource set and a TCI state of the CORESET pool index; or configuring an association relationship between the CSI-RS resource or the CSI-RS resource set and at least one of the N sets of TCI states.

In some embodiments, in response to sending the configuration of the RRC signaling or the first MAC CE signaling to determine the TCI state corresponding to the CSI-RS resource, the first parameter may be configured for the CSI-RS resource or the CSI-RS resource set.

For example, the first parameter may be followunifiedTClstate. When the configuration of the RRC signaling or the first MAC CE signaling is sent to determine the TCI state corresponding to the CSI-RS resource, followunifiedTClstate may be configured by the RRC signaling or the first MAC CE signaling. The followunifiedTClstate may indicate whether the CSI-RS resource or CSI-RS resource set is followsunifiedTClstate. For example, the unified TCI state is adopted or not adopted.

In some embodiments, in response to sending the configuration of the RRC signaling or the first MAC CE signaling to determine the TCI state corresponding to the CSI-RS resource, the CORESET pool index may be configured for the CSI-RS resource or the CSI-RS resource set.

For example, in the M-DCI based M-TRP scenario, when the configuration of the RRC signaling or the first MAC CE signaling is sent to determine the TCI state corresponding to the CSI-RS resource, CORESETPoolIndex may be configured for the CSI-RS resource or the CSI-RS resource set by the RRC signaling or the first MAC CE signaling. That is, the TCI state corresponding to the CSI-RS resource or the CSI-RS resource set can be the same as the TCI state of CORESETPoolIndex.

It can be understood that the TCI state of CORESETPoolIndex can represent the unified TCI state of CORESETPoolIndex. That is, the unified TCI state of CORESETPoolIndex is a TCI state corresponding to the codepoint indicated by the TCI state field in the DCI transmitted by the PDCCH in the CORESET of the CORESETPoolIndex.

In some embodiments, in response to sending the configuration of the RRC signaling or the first MAC CE signaling to determine the TCI state corresponding to the CSI-RS resource, the association relationship between the CSI-RS resource or the CSI-RS resource set and the TCI state of the CORESET pool index may be configured.

For example, in the M-DCI based M-TRP scenario, when the configuration of the RRC signaling or the first MAC CE signaling is sent to determine the TCI state corresponding to the CSI-RS resource, the association relationship between the CSI-RS resource or the CSI-RS resource set and the TCI state of CORESETPoolIndex can be configured by the RRC signaling or the first MAC CE signaling.

For example, it is possible to configure which TCI state of CORESETPoolIndex is used as the TCI state of the CSI-RS resource or the CSI-RS resource set. It can be understood that in the scenario of M-TRP of M-DCI, there may be a plurality of CORESET pools, thus the corresponding CORESET can be indicated by CORESETPoolIndex, so that the TCI state of the CORESET pool is used as the TCI state of the CSI-RS resource or the CSI-RS resource set.

In some embodiments, in response to sending the configuration of the RRC signaling or the first MAC CE signaling to determine the TCI state corresponding to the CSI-RS resource, the association relationship between the CSI-RS resource or the CSI-RS resource set and at least one of the N sets of TCI states can be configured.

For example, in the S-DCI based M-TRP scenario, when the configuration of the RRC signaling or the first MAC CE signaling is sent to determine the TCI state corresponding to the CSI-RS resource, the association relationship between the CSI-RS resource or the CSI-RS resource set and at least one of the N sets of TCI states can be configured by the RRC signaling or the first MAC CE signaling.

For example, it is possible to configure which set or sets of TCI states among the N sets of TCI states are used as the TCI state of the CSI-RS resource or the CSI-RS resource set. It can be understood that in the scenario of M-TRP of S-DCI, there is only one CORESET pool, so it is possible to configure which set or sets of TCI states among the N sets of TCI states are used as the TCI state of the CSI-RS resource or the CSI-RS resource set.

The present disclosure provides a plurality of ways to determine the CSI-RS resource based on the configuration of the RRC signaling or first MAC CE signaling, thereby improving the transmission flexibility of the CSI-RS resource based on the unified TCI state.

In the method for configuring the transmission configuration indication state provided by embodiments of the present disclosure, in response to configuring the TCI state of the first CORESET, and/or in response to determining the TCI state corresponding to the CSI-RS resource based on the default TCI state of the PDSCH, a time offset between the PDCCH that schedules the CSI-RS resource and the CSI-RS resource is less than a first threshold.

In some embodiments, in response to configuring the TCI state of the first CORESET, and/or in response to determining the TCI state corresponding to the CSI-RS resource based on the default TCI state of the PDSCH, the offset between the PDCCH that schedules the CSI-RS resource and the CSI-RS resource is less than the first threshold.

For example, when the TCI state of the first CORESET is configured, the offset between the PDCCH that schedules the CSI-RS resource and the CSI-RS resource is less than the first threshold.

For another example, when the TCI state corresponding to the CSI-RS resource is determined based on the default TCI state of the PDSCH, the offset between the PDCCH that schedules the CSI-RS resource and the CSI-RS resource is less than the first threshold.

It can be understood that in this embodiment, a time period corresponding to the first threshold can be used by the terminal to demodulate the PDCCH to determine the TCI state indicated by the PDCCH. When the offset between the PDCCH that schedules the CSI-RS resource and the CSI-RS resource is less than the first threshold, it can be considered that the terminal has not yet completed demodulation of the PDCCH, and therefore cannot determine the TCI state indicated by the PDCCH. In this case, only the default value can be used, for example, the TCI state of the first CORESET or the default TCI state of the PDSCH is used to determine the TCI state corresponding to the CSI-RS resource.

The present disclosure is applicable to a case where the CSI-RS resource is determined when the TCI state cannot be determined through the PDCCH, thereby improving the transmission flexibility of the CSI-RS resource based on the unified TCI state.

In the method for configuring the transmission configuration indication state provided by embodiments of the present disclosure, in response to sending other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

In some embodiments, in response to sending other downlink signal, the offset between the other downlink signal and the PDCCH that schedules the other downlink signal is greater than the second threshold, and/or the offset between the CSI-RS resource and the PDCCH that schedules the CSI-RS resource is greater than the third threshold.

The other downlink signal may be the PDSCH.

For example, in the case of sending other downlink signal, the offset between the other downlink signal and the PDCCH that schedules the other downlink signal is greater than the second threshold.

For another example, in the case of sending other downlink signal, the offset between the CSI-RS resource and the PDCCH that schedules the CSI-RS resource is greater than the third threshold.

For yet another example, in the case of sending other downlink signal, the offset between the other downlink signal and the PDCCH that schedules the other downlink signal is greater than the second threshold, and the offset between the CSI-RS resource and the PDCCH that schedules the CSI-RS resource is greater than the third threshold.

It can be understood that in this embodiment, the offset between other downlink signal and the PDCCH that schedules the other downlink signal is greater than the second threshold, and/or the offset between the CSI-RS resource and the PDCCH that schedules the CSI-RS resource is greater than the third threshold, which can indicate that the terminal can determine the TCI state of the PDSCH indicated by the PDCCH. Therefore, the TCI state of the PDSCH can be used as the TCI state corresponding to the CSI-RS resource.

The present disclosure is applicable to a case where the CSI-RS resource is determined when the TCI state is determined through the PDCCH, thereby improving the transmission flexibility of the CSI-RS resource based on the unified TCI state.

In the method for configuring the transmission configuration indication state provided by embodiments of the present disclosure, sending the indication information includes: sending at least one indication information, each of the at least one indication information is used to indicate K sets of TCI states, K values corresponding to different indication information are the same or different, and K is a positive integer; the N sets of TCI states are determined based on K sets of TCI states indicated by first indication information, and the at least one indication information includes the first indication information; or, the N sets of TCI states are determined based on K sets of TCI states indicated by a plurality of indication information.

In some embodiments, the network device may send one or more indication information to the terminal. Each indication information sent by the network device may be used to indicate the K sets of TCI states. It can be understood that the K values corresponding to different indication information may be the same or different, and K is a positive integer.

For example, the network device may send one indication information to the terminal, and this indication information indicates K1 sets of TCI states. For another example, the network device may send a plurality of indication information to the terminal, such as two indication information, one of the two indication information indicates K2 sets of TCI states, and the other indication information indicates K3 sets of TCI states. It can be understood that K2 and K3 may be the same or different.

In some embodiments, the N sets of TCI states may be determined based on the K sets of TCI states indicated by the first indication information, and the at least one indication information includes the first indication information.

It can be understood that the network device can determine the N sets of TCI states based on the K sets of TCI states indicated by the first indication information among the plurality of indication information which is sent at a certain time.

For example, the network device can determine the N sets of TCI states based on the K sets of TCI states indicated by the first indication information, and the first indication information is one of the at least one indication information sent by the terminal.

Here, K may be the same as or different from N.

In some embodiments, the N sets of TCI states are determined based on the K sets of TCI states indicated by the plurality of indication information.

It can be understood that the network device can determine the N sets of TCI states based on the K sets of TCI states indicated by the plurality of indication information.

For example, the plurality of indication information is assumed to be two indication information. The network device can determine the N sets of TCI states based on the K1 set of TCI states indicated by the first indication information and the K2 set of TCI states indicated by the second indication information. K1 can be the same as or different from N, and K2 can be the same as or different from N. For example, the first indication information indicates the first set of TCI states and the second set of TCI states, and the second indication information indicates the first set of TCI states and the third set of TCI states. It can be considered that the first set of TCI states indicated by the second indication information is used to update the first set of TCI states indicated by the first indication information. The N sets of TCI states determined by the network device according to the first indication information and the second indication include the updated first set of TCI states, the second set of TCI states, and the third set of TCI states.

Alternatively, the above example only illustratively describes the case where K1 and K2 are the same. In other examples, K1 and K2 may be different. For example, the first indication information indicates the first set of TCI states, the second set of TCI states, and the third set of TCI states, and the second indication information indicates the fourth set of TCI states and the fifth set of TCI states. The N sets of TCI states determined by the network device according to the first indication information and the second indication include the first set of TCI states, the second set of TCI states, the third set of TCI states, the fourth set of TCI states, and the fifth set of TCI states.

For another example, the first indication information indicates the first set of TCI states and the second set of TCI states, and the second indication information indicates the updated second set of TCI states. The N sets of TCI states determined by the network device according to the first indication information and the second indication include the first set of TCI states indicated by the first indication information and the updated second set of TCI states indicated by the second indication information.

It can be understood that the present disclosure does not limit K1 and K2.

The present disclosure provides a plurality of ways to determine the N sets of TCI states, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, in response to the N sets of TCI states being determined based on the K sets of TCI states indicated by the first indication information, the first indication information is indication information most recently sent.

In some embodiments, in response to the N sets of TCI states being determined based on the K sets of TCI states indicated by the first indication information, the first indication information may be the indication information most recently sent by the network device.

For example, the network device may determine the N sets of TCI states according to the K sets of TCI states indicated by the most recently sent indication information. It is understood that the most recently received indication information by the terminal may be the last indication information received by the terminal at or before the current moment.

It can be understood that for the K sets of TCI states indicated by the indication information most recently sent by the network device, the K value may be the same as the N value, or may be different from the N value, for example, smaller than the N value.

It should be understood that N in the N sets of TCI states determined by the network device can be determined based on the maximum K value, or can be determined based on the K values corresponding to different indication information, which is not limited by the present disclosure.

In the present disclosure, the N sets of TCI states is determined through the most recently sent indication information, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, in response to the N sets of TCI states being determined based on the K sets of TCI states indicated by the plurality of indication information, the plurality of indication information includes the first indication information and second indication information; the first indication information is indication information most recently sent; the second indication information is indication information before the first indication information, and at least one set of TCI states in the second indication information is not updated in the first indication information.

In some embodiments, the network device may respond to the N sets of TCI states being determined based on the K sets of TCI states indicated by the plurality of indication information, and the plurality of indication information may include the first indication information and the second indication information.

In some embodiments, the first indication information may be the indication information most recently sent by the network device. The second indication information may be the indication information sent by the terminal before the first indication information, and the at least one set of TCI states in the second indication information may not be updated in the first indication information. That is, the first indication information may not include the at least one set of TCI states in the second indication information.

For example, the network device first sends the second indication information, and the second indication information includes the first set of TCI states and the second set of TCI states. After that, the network device sends the first indication information. The first indication information includes the second set of TCI states. Or, the first indication information includes the third set of TCI states and the fourth set of TCI states. That is, the second indication information should include at least one set of TCI states that is not included in the first indication information.

If the first indication information includes a TCI state that is the TCI state in the second indication information, it can be considered that the first indication information updates the TCI state in the second indication information.

In the present disclosure, the N sets of TCI states are determined by sending the plurality of indication information, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, the indication information is carried by a second MAC CE, the second MAC CE is used to indicate the K sets of TCI states, and the K sets of TCI states correspond to a codepoint of a TCI state field in a first DCI.

In some embodiments, the indication information may be carried by the second MAC CE. The second MAC CE may be used to indicate the K sets of TCI states. The K sets of TCI states may correspond to the codepoint in the TCI state field in the first DCI. In this case, the TCI state field of the first DCI does not need to further indicate the codepoint.

It can be understood that if K is greater than 1, the activated TCI state of each codepoint must be greater than 1.

If K is greater than or equal to 1, the number of activated TCI states of each codepoint may be greater than or equal to one TCI state. For example, there may be one codepoint corresponding to a plurality of sets of TCI states, and the remaining codepoints may update one or more of the plurality of sets of TCI states. If a set of TCI states is not updated, the terminal continues to use the old TCI state for transmission of the physical shared channel.

The present disclosure provides a way to indicate the TCI state by carrying the indication information through the MAC CE, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

In some embodiments, the indication information may be carried by the third MAC CE and the second DCI. The third MAC CE may be used to indicate the plurality of K sets of TCI states. It can be understood that each K set of TCI states corresponds to a codepoint. In other words, the third MAC CE indicates the K sets of TCI states corresponding to each of the plurality of codepoints. The TCI state field in the second DCI is used to indicate one of the plurality of codepoints, so as to further indicate a specific one among the plurality of K sets of TCI states.

It can be understood that for the K sets of TCI states corresponding to each of the plurality of codepoints, the values of K can be the same or different.

It should be understood that if K is greater than 1, the activated TCI state of each codepoint must be greater than 1.

If K is greater than or equal to 1, the number of activated TCI states of each codepoint may be greater than or equal to one TCI state. For example, there may be one codepoint corresponding to a plurality of sets of TCI states, and the remaining codepoints may update one or more of the plurality of sets of TCI states. If a set of TCI states is not updated, the terminal continues to use the old TCI state for transmission of the physical shared channel.

The present disclosure provides a way to indicate the TCI state by carrying the indication information through the MAC CE and the DCI, and in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, each set of TCI states includes at least one of: an UL TCI state and/or a DL TCI state; or a joint TCI state.

In some embodiments, each set of TCI states may include the UL TCI state and/or the DL TCI state.

For example, a set of TCI states may include the UL TCI state. For another example, a set of TCI states may include the DL TCI state. For yet another example, a set of TCI states may include the UL TCI state and the DL TCI state.

In some embodiments, each set of TCI states may include the joint TCI state.

It can be understood that the joint TCI state can be used to jointly indicate both the uplink TCI state and the downlink TCI state.

The present disclosure provides a plurality of representations of a set of TCI states, so that in the multi-TRP scenario, the TCI state corresponding to the CSI-RS resource can be determined according to the unified TCI state, thereby improving the transmission flexibility of the CSI-RS resource based on the unified TCI state.

In the method for configuring the transmission configuration indication state provided by embodiments of the present disclosure, the CSI-RS resource includes at least one of: a resource for CSI measurement; or a CSI-RS resource for beam management.

In some embodiments, the CSI-RS resource may include the resource for the CSI measurement.

In some embodiments, the CSI-RS resource may include the CSI-RS resource for the beam management.

In some embodiments, the CSI-RS resource may include the resource for the CSI measurement and the CSI-RS resource used for the beam management.

The present disclosure provides a variety of possible forms of the CSI-RS resource, and in the multi-TRP scenario, the TCI state corresponding to the CSI-RS resource can be determined according to the unified TCI state, thereby improving the transmission flexibility of the CSI-RS resource based on the unified TCI state.

It should be noted that those skilled in the art can understand that the various implementation methods/embodiments involved in the embodiments of the present disclosure can be used in conjunction with the aforementioned embodiments or can be used independently. Whether used alone or in conjunction with the aforementioned embodiments, the implementation principle is similar. In the implementation of the present disclosure, some embodiments are described in terms of implementation methods used together. Alternatively, those skilled in the art can understand that such examples are not limitations of the embodiments of the present disclosure.

Based on the same concept, embodiments of the present disclosure further provide an apparatus and a device for configuring a transmission configuration indication state.

It can be understood that in order to implement the above-mentioned functions, the apparatus and the device for collecting the data provided in embodiments of the present disclosure include corresponding hardware structures and/or software modules for executing respective functions. In combination with units and algorithm steps of various examples disclosed in embodiments of the present disclosure, embodiments of the present disclosure may be implemented by in a form of hardware or a combination of the hardware and computer software. Whether a certain function is implemented in the fashion of hardware or in the fashion that the computer software drives the hardware depends on a particular application and design constraints of the technical solution. A person skilled in the art may implement the described functions with different methods for each particular application, but such an implementation shall not be regarded as going beyond the scope of the technical solution according to embodiments of the present disclosure.

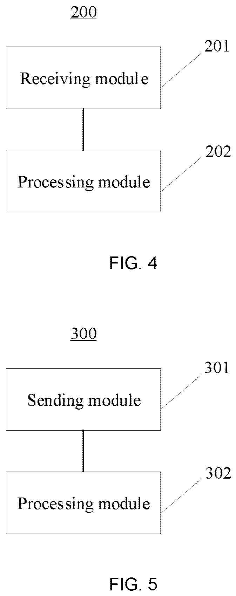

FIG. 4 shows a schematic diagram of an apparatus for configuring a transmission configuration indication state according to an example embodiment. Referring to FIG. 4, the apparatus 200 includes: a receiving module 201, configured to receive indication information, the indication information is used to determine a unified TCI state, and the unified TCI state includes N sets of TCI states, where N is a positive integer; and a processing module 202, configured to determine a TCI state corresponding to a CSI-RS resource.

In the present disclosure, the TCI state corresponding to the CSI-RS resource is determined in the multi-TRP scenario, thereby improving the transmission flexibility of the CSI-RS resource based on the unified TCI state.

In some implementations, in response to N being equal to 1 and existence of at least two CORESETs corresponding to different CORESET pool indexes, determining the TCI state corresponding to the CSI-RS resource by using at least one of manners: performing determination based on a configuration of a Radio Resource Control (RRC) signaling or a first Medium Access Control Control Element (MAC CE) signaling; performing determination based on a first CORESET, wherein the first CORESET is a CORESET corresponding to a PDCCH that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or performing determination based on other downlink signal, wherein the other downlink signal is overlapped with the CSI-RS resource in a time domain, and a CORESET corresponding to a PDCCH that schedules the other downlink signal and the CORESET corresponding to the PDCCH that schedules the CSI-RS resource have the same CORESET pool index.

The present disclosure provides a plurality of ways to determine the TCI state corresponding to the CSI-RS resource in the multi-DCI and multi-TRP scenario, thereby improving the transmission flexibility of the CSI-RS resource based on the unified TCI state.

In some implementations, the CORESET pool index is associated with a PCI of a serving cell; or, the CORESET pool index is associated with a PCI of a non-serving cell.

In the present disclosure, the CORESET pool index can be associated with the PCIs of a plurality of different cells to determine the TCI state corresponding to the CSI-RS resource in the corresponding multi-DCI and multi-TRP scenario in a plurality of manners, thereby improving the transmission flexibility of the CSI-RS resource based on the unified TCI state.

In some implementations, in response to N being greater than or equal to 1 and the PDCCH being not configured with an SFN scheme, determining the TCI state corresponding to the CSI-RS resource by using at least one of manners: performing determination based on a configuration of a RRC signaling or a first MAC CE signaling; performing determination based on a default TCI state of a PDSCH; performing determination based on a first CORESET, wherein the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active BWP; or performing determination based on other downlink signal, wherein the other downlink signal is overlapped with the CSI-RS resource in a time domain.

The present disclosure provides a plurality of ways to determine the TCI state corresponding to the CSI-RS resource in a single-DCI and multi-TRP scenario where the PDCCH is not configured with the SFN, thereby improving the transmission flexibility of the CSI-RS resource based on the unified TCI state.

In some implementations, in response to N being greater than or equal to 1, the PDCCH being configured with an SFN scheme, and at least one CORESET being used to transmit the PDCCH based on a plurality of TCI states, determining the TCI state corresponding to the CSI-RS resource by using at least one of manners: performing determination based on a configuration of a RRC signaling or a first MAC CE signaling; performing determination based on other downlink signal, wherein the other downlink signal is overlapped with the CSI-RS resource in a time domain; or performing determination based on at least a first set of TCI states in a first CORESET, wherein the first CORESET is a CORESET with the smallest CORESET index corresponding to a search space in the most recently detected slot.

The present disclosure provides a plurality of ways to determine the TCI state corresponding to the CSI-RS resource in a single-DCI and multi-TRP scenario where the PDCCH is configured with the SFN, thereby improving the transmission flexibility of the CSI-RS resource based on the unified TCI state.

In some implementations, in response to the TCI state corresponding to the CSI-RS resource being determined based on the configuration of the RRC signaling or the first MAC CE signaling, the configuration includes at least one of: configuring a first parameter for the CSI-RS resource or a CSI-RS resource set; configuring a CORESET pool index for the CSI-RS resource or the CSI-RS resource set; configuring an association relationship between the CSI-RS resource or the CSI-RS resource set and a TCI state of a CORESET pool index; or configuring an association relationship between the CSI-RS resource or the CSI-RS resource set and at least one of the N sets of TCI states.

The present disclosure provides a plurality of ways to determine the CSI-RS resource based on the configuration of the RRC signaling or first MAC CE signaling, thereby improving the transmission flexibility of the CSI-RS resource based on the unified TCI state.

In some implementations, in response to the TCI state corresponding to the CSI-RS resource being determined based on the first CORESET, and/or in response to the TCI state corresponding to the CSI-RS resource being determined based on the default TCI state of the PDSCH, an offset between the PDCCH that schedules the CSI-RS resource and the CSI-RS resource is less than a first threshold.

The present disclosure is applicable to a case where the CSI-RS resource is determined when the terminal cannot determine the TCI state through the PDCCH, thereby improving the transmission flexibility of the CSI-RS resource based on the unified TCI state.

In some implementations, in response to the TCI state corresponding to the CSI-RS resource being determined based on the other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

The present disclosure is applicable to a case where the CSI-RS resource is determined when the terminal can determine the TCI state through the PDCCH, thereby improving the transmission flexibility of the CSI-RS resource based on the unified TCI state.

In some embodiments, the receiving module 201 is further configured to receive at least one indication information, wherein each of the at least one indication information is used to indicate K sets of TCI states, K values corresponding to different indication information are the same or different, and K is a positive integer; the N sets of TCI states are determined based on K sets of TCI states indicated by first indication information, and the at least one indication information includes the first indication information; or, the N sets of TCI states are determined based on K sets of TCI states indicated by a plurality of indication information.

The present disclosure provides a plurality of ways to determine the N sets of TCI states, and in the multi-TRP scenario, the TCI state corresponding to the CSI-RS resource can be determined according to the unified TCI state, thereby improving the transmission flexibility of the CSI-RS resource based on the unified TCI state.

In some implementations, in response to the N sets of TCI states being determined based on the K sets of TCI states indicated by the first indication information, the first indication information is indication information most recently received.

In the present disclosure, the N sets of TCI states are determined through the most recently received indication information, and in the multi-TRP scenario, the TCI state corresponding to the CSI-RS resource can be determined according to the unified TCI state, thereby improving the transmission flexibility of the CSI-RS resource based on the unified TCI state.

In some implementations, in response to the N sets of TCI states being determined based on the K sets of TCI states indicated by the plurality of indication information, the plurality of indication information includes the first indication information and second indication information; the first indication information is indication information most recently received; the second indication information is indication information before the first indication information, and at least one set of TCI states in the second indication information is not updated in the first indication information.

In the present disclosure, the N sets of TCI states are determined by receiving the plurality of indication information, and in the multi-TRP scenario, the TCI state corresponding to the CSI-RS resource can be determined according to the unified TCI state, thereby improving the transmission flexibility of the CSI-RS resource based on the unified TCI state.

In some implementations, the indication information is carried by a second MAC CE, the second MAC CE is used to indicate the K sets of TCI states, and the K sets of TCI states correspond to a codepoint of a TCI state field in a first DCI.

The present disclosure provides a way to indicate the TCI state by carrying the indication information through the MAC CE, and in the multi-TRP scenario, the TCI state corresponding to the CSI-RS resource can be determined according to the unified TCI state, thereby improving the transmission flexibility of the CSI-RS resource based on the unified TCI state.

In some implementations, the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

The present disclosure provides a way to indicate the TCI state by carrying the indication information through the MAC CE and the DCI, and in the multi-TRP scenario, the TCI state corresponding to the CSI-RS resource can be determined according to the unified TCI state, thereby improving the transmission flexibility of the CSI-RS resource based on the unified TCI state.

In some implementations, each set of TCI states includes at least one of: an Uplink (UL) TCI state and/or a Downlink (DL) TCI state; or a joint TCI state.

The present disclosure provides a plurality of representations of a set of TCI states, so that in the multi-TRP scenario, the TCI state corresponding to the CSI-RS resource can be determined according to the unified TCI state, thereby improving the transmission flexibility of the CSI-RS resource based on the unified TCI state.

In some implementations, the CSI-RS resource includes at least one of: a resource for CSI measurement; or a CSI-RS resource for beam management.

The present disclosure provides a variety of possible forms of the CSI-RS resource, and in the multi-TRP scenario, the TCI state corresponding to the CSI-RS resource can be determined according to the unified TCI state, thereby improving the transmission flexibility of the CSI-RS resource based on the unified TCI state.

FIG. 5 shows a schematic diagram of another apparatus for configuring a transmission configuration indication state according to an example embodiment. Referring to FIG. 5, the apparatus 300 includes: a sending module 301, configured to send indication information, the indication information is used to determine a unified TCI state, and the unified TCI state includes N sets of TCI states, where N is a positive integer; and a processing module 302, configured to determine a TCI state corresponding to a CSI-RS resource.

In the present disclosure, the TCI state corresponding to the CSI-RS resource is determined in the multi-TRP scenario, thereby improving the transmission flexibility of the CSI-RS resource based on the unified TCI state.

In some implementations, in response to N being equal to 1 and existence of at least two CORESETs corresponding to different CORESET pool indexes, determining the TCI state corresponding to the CSI-RS resource by using at least one of manners: the sending module 301 is further configured to send a RRC signaling or a first MAC CE signaling to configure the TCI state corresponding to the CSI-RS resource; the processing module 302 is further configured to configure a TCI state of a first CORESET, wherein the first CORESET is used by a terminal to determine the TCI state corresponding to the CSI-RS resource, the first CORESET is a CORESET corresponding to a PDCCH that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or the sending module 301 is further configured to send other downlink signal, wherein the other downlink signal is used by the terminal to determine the TCI state corresponding to the CSI-RS resource, the other downlink signal is overlapped with the CSI-RS resource in a time domain, and a CORESET corresponding to a PDCCH that schedules the other downlink signal and the CORESET corresponding to the PDCCH that schedules the CSI-RS resource have the same CORESET pool index.

The present disclosure provides a plurality of ways to determine the TCI state corresponding to the CSI-RS resource in the multi-DCI and multi-TRP scenario, thereby improving the transmission flexibility of the CSI-RS resource based on the unified TCI state.

In some implementations, the CORESET pool index is associated with a PCI of a serving cell; or, the CORESET pool index is associated with a PCI of a non-serving cell.

In the present disclosure, the CORESET pool index can be associated with the PCIs of a plurality of different cells to determine the TCI state corresponding to the CSI-RS resource in the corresponding multi-DCI and multi-TRP scenario in a plurality of manners, thereby improving the transmission flexibility of the CSI-RS resource based on the unified TCI state.

In some implementations, in response to N being greater than or equal to 1 and a PDCCH being not configured with an SFN scheme, determining the TCI state corresponding to the CSI-RS resource by using at least one of manners: the sending module 301 is further configured to send a RRC signaling or a first MAC CE signaling to configure the TCI state corresponding to the CSI-RS resource; the processing module 302 is further configured to perform determination based on a default TCI state of a PDSCH; the processing module 302 is further configured to configure a TCI state of a first CORESET, wherein the first CORESET is used by a terminal to determine the TCI state corresponding to the CSI-RS resource, the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active BWP; or the sending module 301 is further configured to send other downlink signal, wherein the other downlink signal is used by the terminal to determine the TCI state corresponding to the CSI-RS resource, and the other downlink signal is overlapped with the CSI-RS resource in a time domain.

The present disclosure provides a plurality of ways to determine the TCI state corresponding to the CSI-RS resource in a single-DCI and multi-TRP scenario where the PDCCH is not configured with the SFN, thereby improving the transmission flexibility of the CSI-RS resource based on the unified TCI state.

In some implementations, in response to N being greater than or equal to 1, the PDCCH being configured with an SFN scheme, and at least one CORESET being used to transmit the PDCCH based on a plurality of TCI states, determining the TCI state corresponding to the CSI-RS resource by using at least one of manners: the sending module 301 is further configured to send a RRC signaling or a first MAC CE signaling to configure the TCI state corresponding to the CSI-RS resource; the sending module 301 is further configured to send other downlink signal, wherein the other downlink signal is used by the terminal to determine the TCI state corresponding to the CSI-RS resource, and the other downlink signal is overlapped with the CSI-RS resource in a time domain; or the processing module 302 is further configured to configure at least a first set of TCI states in a first CORESET, wherein at least the first set of TCI states in the first CORESET is used by the terminal to determine the TCI state corresponding to the CSI-RS resource, and the first CORESET is a CORESET with the smallest CORESET index corresponding to a search space in the most recently detected slot.

The present disclosure provides a plurality of ways to determine the TCI state corresponding to the CSI-RS resource in a single-DCI and multi-TRP scenario where the PDCCH is configured with the SFN, thereby improving the transmission flexibility of the CSI-RS resource based on the unified TCI state.

In some implementations, in response to sending the RRC signaling or the first MAC CE signaling to configure the TCI state corresponding to the CSI-RS resource, the configuration includes at least one of: configuring a first parameter for the CSI-RS resource or a CSI-RS resource set; configuring a CORESET pool index for the CSI-RS resource or the CSI-RS resource set; configuring an association relationship between the CSI-RS resource or the CSI-RS resource set and a TCI state of a CORESET pool index; or configuring an association relationship between the CSI-RS resource or the CSI-RS resource set and at least one of the N sets of TCI states.

The present disclosure provides a plurality of ways to determine the CSI-RS resource based on the configuration of the RRC signaling or first MAC CE signaling, thereby improving the transmission flexibility of the CSI-RS resource based on the unified TCI state.

In some implementations, in response to configuring the TCI state of the first CORESET, and/or in response to determining the TCI state corresponding to the CSI-RS resource based on the default TCI state of the PDSCH, an offset between the PDCCH that schedules the CSI-RS resource and the CSI-RS resource is less than a first threshold.

The present disclosure is applicable to a case where the CSI-RS resource is determined when the TCI state cannot be determined through the PDCCH, thereby improving the transmission flexibility of the CSI-RS resource based on the unified TCI state.

In some implementations, in response to sending the other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

The present disclosure is applicable to a case where the CSI-RS resource is determined when the TCI state is determined through the PDCCH, thereby improving the transmission flexibility of the CSI-RS resource based on the unified TCI state.

In some implementations, the sending module 301 is further configured to send at least one indication information, wherein each of the at least one indication information is used to indicate K sets of TCI states, K values corresponding to different indication information are the same or different, and K is a positive integer; the N sets of TCI states are determined based on K sets of TCI states indicated by first indication information, and the at least one indication information includes the first indication information; or, the N sets of TCI states are determined based on K sets of TCI states indicated by a plurality of indication information.

The present disclosure provides a plurality of ways to determine the N sets of TCI states, and in the multi-TRP scenario, the TCI state corresponding to the CSI-RS resource can be determined according to the unified TCI state, thereby improving the transmission flexibility of the CSI-RS resource based on the unified TCI state.

In some implementations, in response to the N sets of TCI states being determined based on the K sets of TCI states indicated by the first indication information, the first indication information is indication information most recently sent.

In the present disclosure, the N sets of TCI states is determined through the most recently sent indication information, and in the multi-TRP scenario, the TCI state corresponding to the CSI-RS resource can be determined according to the unified TCI state, thereby improving the transmission flexibility of the CSI-RS resource based on the unified TCI state.

In some implementations, in response to the N sets of TCI states being determined based on the K sets of TCI states indicated by the plurality of indication information, the plurality of indication information includes the first indication information and second indication information; the first indication information is indication information most recently sent; the second indication information is indication information before the first indication information, and at least one set of TCI states in the second indication information is not updated in the first indication information.

In the present disclosure, the N sets of TCI states are determined by sending the plurality of indication information, and in the multi-TRP scenario, the TCI state corresponding to the CSI-RS resource can be determined according to the unified TCI state, thereby improving the transmission flexibility of the CSI-RS resource based on the unified TCI state.

In some implementations, the indication information is carried by a second MAC CE, the second MAC CE is used to indicate the K sets of TCI states, and the K sets of TCI states correspond to a codepoint of a TCI state field in a first DCI.

The present disclosure provides a way to indicate the TCI state by carrying the indication information through the MAC CE, and in the multi-TRP scenario, the TCI state corresponding to the CSI-RS resource can be determined according to the unified TCI state, thereby improving the transmission flexibility of the CSI-RS resource based on the unified TCI state.

In some implementations, the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

The present disclosure provides a way to indicate the TCI state by carrying the indication information through the MAC CE and the DCI, and in the multi-TRP scenario, the TCI state corresponding to the CSI-RS resource can be determined according to the unified TCI state, thereby improving the transmission flexibility of the CSI-RS resource based on the unified TCI state.

In some implementations, each set of TCI states includes at least one of: an UL TCI state and/or a DL TCI state; or a joint TCI state.

The present disclosure provides a plurality of representations of a set of TCI states, so that in the multi-TRP scenario, the TCI state corresponding to the CSI-RS resource can be determined according to the unified TCI state, thereby improving the transmission flexibility of the CSI-RS resource based on the unified TCI state.

In some implementations, the CSI-RS resource includes at least one of: a resource for CSI measurement; or a CSI-RS resource for beam management.

The present disclosure provides a variety of possible forms of the CSI-RS resource, and in the multi-TRP scenario, the TCI state corresponding to the CSI-RS resource can be determined according to the unified TCI state, thereby improving the transmission flexibility of the CSI-RS resource based on the unified TCI state.

It can be understood that the above apparatus 200 may further include a sending module, and the apparatus 300 may further include a receiving module. It should be understood that the above apparatus 200 and the apparatus 300 are not limited to various modules shown in the figure, and may further include other corresponding modules according to actual conditions, which is not limited in the present disclosure.

Regarding the apparatus in the above embodiments, a specific manner in which each module performs operations has been described in detail in the method embodiments, which will not be elaborated here.

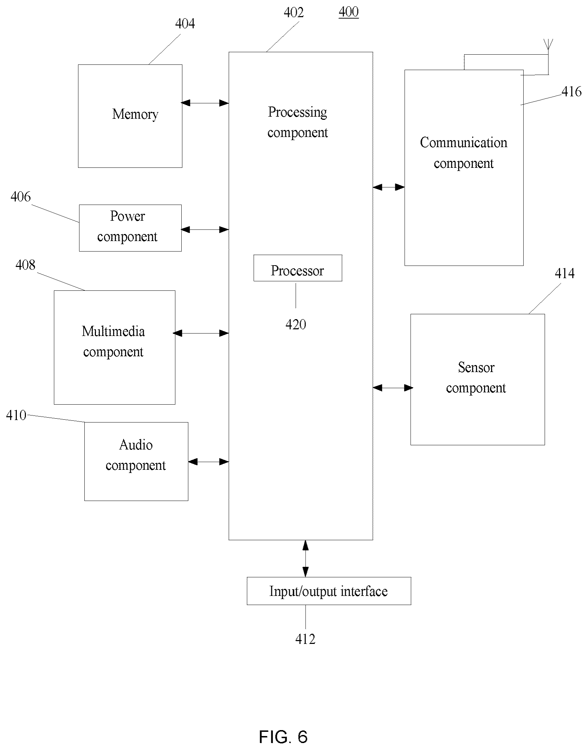

FIG. 6 shows a schematic diagram of a device for configuring a transmission configuration indication state according to an example embodiment. For example, the device 400 may be any terminal such as a mobile phone, a computer, a digital broadcast terminal, a messaging device, a gaming console, a tablet device, a medical device, an exercise device, a personal digital assistant, etc.

Referring to FIG. 6, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to complete all or part of the steps in the above described methods. Moreover, the processing component 402 may include one or more modules which facilitate the interaction between the processing component 402 and other components. For example, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide state assessments of various aspects of the device 400. For example, the sensor component 414 may detect an open/closed state of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may further include a light sensor, such as a CMOS or CCD image sensor, for use in imaging applications. In some embodiments, the sensor component 414 may further include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 may access a wireless network based on a communication standard, such as Wi-Fi, 2G or 3G, or a combination thereof. In an embodiment, the communication component 416 receives a broadcast signal or broadcast associated information from an external broadcast management system via a broadcast channel. In an embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the device 400 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 404 including instructions, the above instructions may be executed by the processor 420 in the device 400 for completing the above-described methods. For example, the non-transitory computer-readable storage medium may be a ROM, a Random Access Memory (RAM), a CD-ROM, a magnetic tape, a floppy disc, an optical data storage device, and the like.

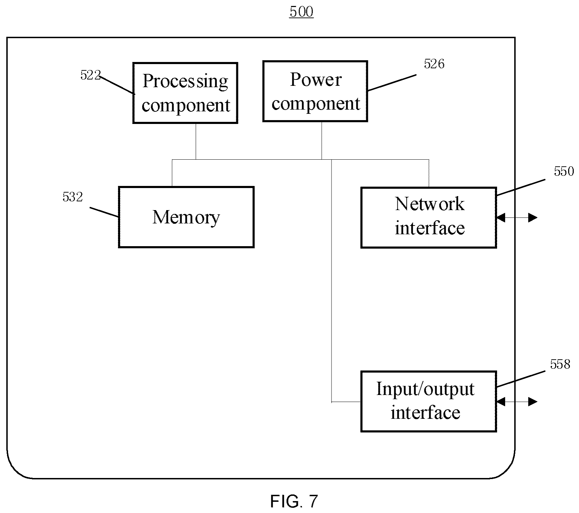

FIG. 7 shows a schematic diagram of another device for configuring a transmission configuration indication state according to an example embodiment. For example, the device 500 may be provided as a base station or a server. Referring to FIG. 7, the device 500 includes a processing component 522, which further includes one or more processors and a memory resource represented by a memory 532 for storing instructions executable by the processing component 522, such as an application program. The application program stored in the memory 532 may include one or more modules, each corresponding to a set of instructions. In addition, the processing component 522 is configured to execute the instructions to execute the aforementioned method.

The device 500 may further include: a power component 526 configured to perform power management of the device 500, a wired or wireless network interface 550 configured to connect the device 500 to the network, and an input/output (I/O) interface 558. The device 500 may operate an operating system stored in the memory 532, such as Windows Server TM, Mac OS XTM, UnixTM, LinuxTM, FreeBSDTM, or the like.

The present disclosure proposes the method for determining the unified TCI state of the CSI-RS resource in a case where the multi-TRP's unified TCI state is indicated, thereby improving the transmission flexibility of the CSI-RS resource based on the unified TCI state.

It can be further understood that in the present disclosure, "a plurality" refers to two or more, and other quantifiers are analogous to it. "and/or" is used to describe an associated relationship between associated objects and means three relationships, for instance, A and/or B may mean A alone, A and B together, and B alone. The character "/" generally indicates that the associated objects are in an "or" relationship. Singular forms "a", "an" and "the" are intended to include plural forms as well, unless the context clearly indicates otherwise.

It can be further understood that the terms "first", "second", etc. are used to describe various information, but the information should not be limited by these terms. These terms are merely used to distinguish the same type of information from each other and do not denote a particular order or degree of importance. Indeed, the expressions "first", "second", etc. may be used interchangeably. For instance, first information may also be referred to as second information, and similarly, second information may also be referred to as first information, without departing from the scope of the present disclosure.

It can be further understood the meanings of the words "in response to" and "if" involved in the present disclosure depend on the context and the actual usage scene. For example, the word "in response to" as used herein can be interpreted as "upon" or "when" or "if" or "in case".

It can be further understood that although the operations in embodiments of the present disclosure are described in a specific order in the drawings, they should not be understood as requiring that the operations are performed in the specific order shown or in a serial order, or that all the operations shown are performed to get the desired result. In certain environments, multitasking and parallel processing may be advanlabeleous.

Other implementations of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for configuring a Transmission Configuration Indication, TCI, state, performed by a terminal, and comprising:
receiving indication information, wherein the indication information is used to determine a unified TCI state, and the unified TCI state comprises N sets of TCI states, where N is a positive integer; and
determining a TCI state corresponding to a Channel State Information Reference Signal, CSI-RS, resource.

2. The method according to claim 1, wherein in response to N being equal to 1 and existence of at least two Control Resource Sets, CORESETs, corresponding to different CORESET pool indexes, determining the TCI state corresponding to the CSI-RS resource by using at least one of manners:
performing determination based on a configuration of a Radio Resource Control, RRC, signaling or a first Medium Access Control Control Element, MAC CE, signaling;
performing determination based on a first CORESET, wherein the first CORESET is a CORESET corresponding to a Physical Downlink Control Channel, PDCCH, that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or
performing determination based on other downlink signal, wherein the other downlink signal is overlapped with the CSI-RS resource in a time domain, and a CORESET corresponding to a PDCCH that schedules the other downlink signal and the CORESET corresponding to the PDCCH that schedules the CSI-RS resource have the same CORESET pool index.

3. The method according to claim 2, wherein the CORESET pool index is associated with a Physical Cell Identifier, PCI, of a serving cell; or,
the CORESET pool index is associated with a PCI of a non-serving cell.

4. The method according to claim 1, wherein in response to N being greater than or equal to 1 and a PDCCH being not configured with a Single Frequency Network, SFN, scheme, determining the TCI state corresponding to the CSI-RS resource by using at least one of manners:
performing determination based on a configuration of a RRC signaling or a first MAC CE signaling;
performing determination based on a default TCI state of a Physical Downlink Shared Channel, PDSCH;
performing determination based on a first CORESET, wherein the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active Bandwidth Part, BWP; or
performing determination based on other downlink signal, wherein the other downlink signal is overlapped with the CSI-RS resource in a time domain.

5. The method according to claim 1, wherein in response to N being greater than or equal to 1, a PDCCH being configured with an SFN scheme and at least one CORESET being used to transmit the PDCCH based on a plurality of TCI states, determining the TCI state corresponding to the CSI-RS resource by using at least one of manners:
performing determination based on a configuration of a RRC signaling or a first MAC CE signaling;
performing determination based on other downlink signal, wherein the other downlink signal is overlapped with the CSI-RS resource in a time domain; or
performing determination based on at least a first set of TCI states in a first CORESET, wherein the first CORESET is a CORESET with the smallest CORESET index corresponding to a search space in the most recently detected slot.

6. The method according to any one of claims 2 to 5, wherein in response to the TCI state corresponding to the CSI-RS resource being determined based on the configuration of the RRC signaling or the first MAC CE signaling, the configuration comprises at least one of:
configuring a first parameter for the CSI-RS resource or a CSI-RS resource set;
configuring a CORESET pool index for the CSI-RS resource or the CSI-RS resource set;
configuring an association relationship between the CSI-RS resource or the CSI-RS resource set and a TCI state of the CORESET pool index; or
configuring an association relationship between the CSI-RS resource or the CSI-RS resource set and at least one of the N sets of TCI states.

7. The method according to any one of claims 2 to 5, wherein in response to the TCI state corresponding to the CSI-RS resource being determined based on the first CORESET, and/or in response to the TCI state corresponding to the CSI-RS resource being determined based on the default TCI state of the PDSCH, an offset between the PDCCH that schedules the CSI-RS resource and the CSI-RS resource is less than a first threshold.

8. The method according to any one of claims 2 to 5, wherein in response to the TCI state corresponding to the CSI-RS resource being determined based on the other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

9. The method according to any one of claims 1 to 8, wherein receiving the indication information comprises:
receiving at least one indication information, wherein each of the at least one indication information is used to indicate K sets of TCI states, K values corresponding to different indication information are the same or different, and K is a positive integer;
the N sets of TCI states are determined based on K sets of TCI states indicated by first indication information, and the at least one indication information comprises the first indication information; or,
the N sets of TCI states are determined based on K sets of TCI states indicated by a plurality of indication information.

10. The method according to claim 9, wherein in response to the N sets of TCI states being determined based on the K sets of TCI states indicated by the first indication information, the first indication information is indication information most recently received.

11. The method according to claim 9, wherein in response to the N sets of TCI states being determined based on the K sets of TCI states indicated by the plurality of indication information, the plurality of indication information comprises the first indication information and second indication information; and
the first indication information is indication information most recently received, the second indication information is indication information before the first indication information, and at least one set of TCI states in the second indication information is not updated in the first indication information.

12. The method according to any one of claims 1 to 11, wherein the indication information is carried by a second MAC CE, the second MAC CE is used to indicate K sets of TCI states, and the K sets of TCI states correspond to a codepoint of a TCI state field in a first DCI.

13. The method according to any one of claims 1 to 11, wherein the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

14. The method according to any one of claims 1 to 13, wherein each set of TCI states comprises at least one of:
an Uplink, UL, TCI state and/or a Downlink, DL, TCI state; or
a joint TCI state.

15. The method according to any one of claims 1 to 14, wherein the CSI-RS resource comprises at least one of:
a resource for Channel State Information, CSI, measurement; or
a CSI-RS resource for beam management.

16. A method for configuring a Transmission Configuration Indication, TCI, state, performed by a network device, and comprising:
sending indication information, wherein the indication information is used to determine a unified TCI state, the unified TCI state comprises N sets of TCI states, where N is a positive integer; and
determining a TCI state corresponding to a Channel State Information Reference Signal, CSI-RS, resource.

17. The method according to claim 16, wherein in response to N being equal to 1 and existence of at least two Control Resource Sets, CORESETs, corresponding to different CORESET pool indexes, determining the TCI state corresponding to the CSI-RS resource by using at least one of manners:
sending a Radio Resource Control, RRC, signaling or a first Medium Access Control Control Element, MAC CE, signaling to configure the TCI state corresponding to the CSI-RS resource;
configuring a TCI state of a first CORESET, wherein the first CORESET is used by a terminal to determine the TCI state corresponding to the CSI-RS resource, the first CORESET is a CORESET corresponding to a Physical Downlink Control Channel, PDCCH, that schedules the CSI-RS resource, or the first CORESET is a CORESET that has the same CORESET pool index as the CORESET corresponding to the PDCCH that schedules the CSI-RS resource and that has the smallest CORESET index among CORESETs corresponding to a search space in the most recently detected slot; or
sending other downlink signal, wherein the other downlink signal is used by the terminal to determine the TCI state corresponding to the CSI-RS resource, the other downlink signal is overlapped with the CSI-RS resource in a time domain, and a CORESET corresponding to a PDCCH that schedules the other downlink signal and the CORESET corresponding to the PDCCH that schedules the CSI-RS resource have the same CORESET pool index.

18. The method according to claim 17, wherein the CORESET pool index is associated with a Physical Cell Identifier, PCI, of a serving cell; or,
the CORESET pool index is associated with a PCI of a non-serving cell.

19. The method according to claim 16, wherein in response to N being greater than or equal to 1 and a PDCCH being not configured with a Single Frequency Network, SFN, scheme, determining the TCI state corresponding to the CSI-RS resource by using at least one of manners:
sending a RRC signaling or a first MAC CE signaling to configure the TCI state corresponding to the CSI-RS resource;
performing determination based on a default TCI state of a Physical Downlink Shared Channel, PDSCH;
configuring a TCI state of a first CORESET, wherein the first CORESET is used by a terminal to determine the TCI state corresponding to the CSI-RS resource, the first CORESET is a CORESET corresponding to a PDCCH that schedules the CSI-RS resource, or the first CORESET is a CORESET with the smallest CORESET index corresponding to a search space in the most recently detected slot, or the first CORESET is a CORESET with the smallest index on an active Bandwidth Part, BWP; or
sending other downlink signal, wherein the other downlink signal is used by the terminal to determine the TCI state corresponding to the CSI-RS resource, and the other downlink signal is overlapped with the CSI-RS resource in a time domain.

20. The method according to claim 16, wherein in response to N being greater than or equal to 1, a PDCCH being configured with an SFN scheme and at least one CORESET being used to transmit the PDCCH based on a plurality of TCI states, determining the TCI state corresponding to the CSI-RS resource by using at least one of manners:
sending a RRC signaling or a first MAC CE signaling to configure the TCI state corresponding to the CSI-RS resource;
sending other downlink signal, wherein the other downlink signal is used by the terminal to determine the TCI state corresponding to the CSI-RS resource, and the other downlink signal is overlapped with the CSI-RS resource in a time domain; or
configuring at least a first set of TCI states in a first CORESET, wherein at least the first set of TCI states in the first CORESET is used by the terminal to determine the TCI state corresponding to the CSI-RS resource, and the first CORESET is a CORESET with the smallest CORESET index corresponding to a search space in the most recently detected slot.

21. The method according to any one of claims 17 to 20, wherein in response to sending the RRC signaling or the first MAC CE signaling to configure the TCI state corresponding to the CSI-RS resource, the configuration comprises at least one of:
configuring a first parameter for the CSI-RS resource or a CSI-RS resource set;
configuring a CORESET pool index for the CSI-RS resource or the CSI-RS resource set;
configuring an association relationship between the CSI-RS resource or the CSI-RS resource set and a TCI state of the CORESET pool index; or
configuring an association relationship between the CSI-RS resource or the CSI-RS resource set and at least one of the N sets of TCI states.

22. The method according to any one of claims 17 to 20, wherein in response to configuring the TCI state of the first CORESET, and/or in response to determining the TCI state corresponding to the CSI-RS resource based on the default TCI state of the PDSCH, an offset between the PDCCH that schedules the CSI-RS resource and the CSI-RS resource is less than a first threshold.

23. The method according to any one of claims 17 to 20, wherein in response to sending the other downlink signal, an offset between the other downlink signal and the PDCCH that schedules the other downlink signal is greater than a second threshold, and/or an offset between the CSI-RS resource and the PDCCH that schedules the CSI-RS resource is greater than a third threshold.

24. The method according to any one of claims 16 to 23, wherein sending the indication information comprises:
sending at least one indication information, wherein each of the at least one indication information is used to indicate K sets of TCI states, K values corresponding to different indication information are the same or different, and K is a positive integer;
the N sets of TCI states are determined based on K sets of TCI states indicated by first indication information, and the at least one indication information comprises the first indication information; or,
the N sets of TCI states are determined based on K sets of TCI states indicated by a plurality of indication information.

25. The method according to claim 24, wherein in response to the N sets of TCI states being determined based on the K sets of TCI states indicated by the first indication information, the first indication information is indication information most recently sent.

26. The method according to claim 24, wherein in response to the N sets of TCI states being determined based on the K sets of TCI states indicated by the plurality of indication information, the plurality of indication information comprises the first indication information and second indication information; and
the first indication information is indication information most recently sent, the second indication information is indication information before the first indication information, and at least one set of TCI states in the second indication information is not updated in the first indication information.

27. The method according to any one of claims 16 to 26, wherein the indication information is carried by a second MAC CE, the second MAC CE is used to indicate K sets of TCI states, and the K sets of TCI states correspond to a codepoint of a TCI state field in a first DCI.

28. The method according to any one of claims 16 to 26, wherein the indication information is carried by a third MAC CE and a second DCI, the third MAC CE is used to indicate K sets of TCI states corresponding to each of a plurality of codepoints of a TCI state field in the second DCI, and the TCI state field in the second DCI is used to indicate one of the plurality of codepoints.

29. The method according to any one of claims 16 to 28, wherein each set of TCI states comprises at least one of:
an Uplink, UL, TCI state and/or a Downlink, DL, TCI state; or
a joint TCI state.

30. The method according to any one of claims 16 to 29, wherein the CSI-RS resource comprises at least one of:
a resource for Channel State Information, CSI, measurement; or
a CSI-RS resource for beam management.

31. An apparatus for configuring a Transmission Configuration Indication, TCI, state, comprising:
a receiving module, configured to receive indication information, wherein the indication information is used to determine a unified TCI state, and the unified TCI state comprises N sets of TCI states, where N is a positive integer; and
a processing module, configured to determine a TCI state corresponding to a Channel State Information Reference Signal, CSI-RS, resource.

32. An apparatus for configuring a Transmission Configuration Indication, TCI, state, comprising:
a sending module, configured to send indication information, wherein the indication information is used to determine a unified TCI state, and the unified TCI state comprises N sets of TCI states, where N is a positive integer; and
a processing module, configured to determine a TCI state corresponding to a Channel State Information Reference Signal, CSI-RS, resource.

33. A device for configuring a Transmission Configuration Indication, TCI, state, comprising:
a processor; and
a memory, configured to store executable instructions of the processor;
wherein the processor is configured to execute the method according to any one of claims 1 to 15.

34. A device for configuring a Transmission Configuration Indication, TCI, state, comprising:
a processor; and
a memory, configured to store executable instructions of the processor;
wherein the processor is configured to execute the method according to any one of claims 16 to 30.

35. A non-transitory computer-readable storage medium, wherein instructions in the storage medium, when executed by a processor of a terminal, enable the terminal to perform the method according to any one of claims 1 to 15.

36. A non-transitory computer-readable storage medium, wherein instructions in the storage medium, when executed by a processor of a network device, enable the network device to perform the method according to any one of claims 16 to 30.
